# EUROPEAN PATENT APPLICATION

(11) **EP 4 660 789 A1**
(43) Date of publication of application: **10.12.2025**
(21) Application number: 23921504.9
(22) Date of filing: 20.12.2023
(51) Int. Cl.: G06F 8/65, G06F 9/4401, G06F 9/54, A47L 9/28, H04B 3/54, H04L 67/00, H04L 1/16, H04L 27/02

(54) **VACUUM CLEANER, VACUUM CLEANER SYSTEM, AND METHOD FOR UPDATING FIRMWARE OF VACUUM CLEANER SYSTEM**

(30) Priority: 10.02.2023 KR 20230018131
(71) Applicant: LG Electronics Inc., Yeongdeungpo-gu Seoul 07336 (KR)
(72) Inventor: KIM, Daewoo, Seoul 08592 (KR); PARK, Heegu, Seoul 08592 (KR); LEE, Kyungjae, Seoul 08592 (KR)
(74) Representative: Ter Meer Steinmeister & Partner
(86) International application number: PCT/KR2023/021180
(87) International publication number: WO 2024/167132

(57) **Abstract**

The embodiments of the present disclosure may relate to a cleaner system including a cleaning module into which external dust is introduced; a cleaner body configured to supply power to the cleaning module through a power supply terminal and generate suction power so that external dust can be introduced through the cleaning module; and a cleaning station on which the cleaner body is mounted, and configured to charge a battery of the cleaner body through a charging terminal, and when connected to the charging terminal, the cleaner body may perform a boot mode for upgrading firmware of the cleaning module

## Description

### [BACKGROUND]

### [Technical Field]

Embodiments of the present disclosure relate to a cleaner, a cleaner system, and a method of updating the cleaner system, more particularly, a cleaner that may suck external dust, a cleaner system having a cleaner station and configured to suck dust stored in the cleaner therein, and a method of updating firmware between the cleaner and the cleaner station in the cleaner system .

### [Background of the Disclosure]

Generally, a cleaner is an electrical appliance configured to suck in small pieces of trash or dust by sucking air and filling a dust bin provided therein, and is commonly called a vacuum cleaner.

Such vacuum cleaners may be classified into manual cleaners that perform cleaning while the user moves the cleaner, and automatic cleaners that perform cleaning while driving on their own. The manual vacuum cleaners may be classified into canister type vacuum cleaners, upright type vacuum cleaners, handheld vacuum cleaners and stick type vacuum cleaners, depending on the shape

In the past, canister-type vacuum cleaners were widely used for home vacuum cleaners, but recently, handheld vacuum cleaners stick type vacuum cleaners, which can a dust bin and vacuum cleaner body as one unit to improve convenience, are being widely used.

A canister-type vacuum cleaner has a cleaner body and a suction inlet that are connected by a rubber hose or pipe, and in some cases, a brush may be fitted to the suction inlet for use.

A hand vacuum cleaner is designed to maximize portability. The hand vacuum cleaner is light in weight but short in length, so the cleaning area may be limited when sitting down. Accordingly, it is used to clean localized areas such as a desk, sofa or inside a car.

A stick vacuum cleaner may be used standing up so a user can clean without bending down. This makes the stick vacuum cleaner ideal for cleaning wide areas while moving around. While the hand vacuum cleaner can clean narrow spaces, the stick vacuum cleaner can clean wider spaces and high places that are hard to reach. Recently, the stick vacuum cleaner is being provided in modular form, allowing user to actively change the vacuum cleaner type for user on various cleaning targets.

In addition, robot cleaners that clean on their own without user intervention are being used recently. Robot cleaners automatically clean the area they want to clean by driving around the area they want to clean and sucking up foreign substances such as dust from the floor.

However, conventional hand vacuum cleaners, stick vacuum cleaners, and robot cleaners have small dust bins that store collected dust, which is inconvenient because users have to empty the dust bins every time.

In addition, when the dust bin is emptied, there is a problem that dust flies and has a harmful effect on the user's health.

In addition, there is a problem that the suction power of the vacuum cleaner is reduced when the remaining dust in the dust bin is not removed.

In addition, there is a problem that the remaining dust in the dust bin causes an unpleasant odor.

Prior patent document 1 is Korean Patent Publication No. 10-2020-0074001. Prior patent document 1 discloses a cleaning device including a vacuum cleaner and a docking station.

The prior art patent document 1 includes a vacuum cleaner including a dust collector that collects foreign substances, a docking station connected to the dust collector to remove foreign substances collected in the dust collector, and the dust collector is arranged to be docked to the docking station, and the docking station includes a suction device for sucking foreign substances and internal air within the dust collector docked to the docking station.

In addition, the above prior art patent document 1 includes a collecting unit for collecting foreign substances inside the docking station. According to the prior art patent document 1, when the suction device arranged in the docking station is operated, the foreign substances collected in the dust collector are sucked in by negative pressure, and the dust is collected in the collecting unit, thereby cleaning the dust collector of the vacuum cleaner.

In this dust collection process, thin and long foreign substances such as hair may stick to the inner surface of the dust collector due to friction between the vacuum cleaner and the docking station, or may hang over the structure of the dust collector and docking station connection, and may not be collected by the suction power of the docking station and may remain long and stretched out between the dust collector of the vacuum cleaner and the docking station.

Therefore, when the user uses the vacuum cleaner again after the dust collection process of the docking station is completed, the user has no choice but to touch the foreign substances (hereinafter, residual dust) that are stuck and stretched out around the dust collector with his or her hand, and the user has to experience the inconvenience of having to remove the residual dust directly using a wet tissue, etc.

Prior patent document 2 discloses Korean Patent Publication No. 10-2208334. Prior patent document 2 discloses a cleaning device including a vacuum cleaner and a docking station and a control method thereof.

Prior patent document 2 proposes a cleaning device including a docking station that automatically and effectively discharges foreign substances from a dust collector of a vacuum cleaner by providing an irregular suction air flow.

For the above-mentioned solution, prior patent document 2 has a suction device that moves air from a dust collector to the inside of a docking station, and a flow rate control device that opens or closes the suction path. The control unit controls the flow rate control device to operate the suction device or periodically open and close the suction path while the suction device is operating. According to prior patent document 2, as the path is opened and closed by the flow rate control device, irregular air flow occurs inside the path, and the irregular air flow provides an effect in which dust is discharged more efficiently.

However, even in the case of irregularly generating air flow by controlling the flow rate as in prior patent document 2, the ultimate goal is to collect foreign substances such as hair caught in the dust collector into the inside of the docking station. At this time, there is a problem that it is difficult to expect high dust collection efficiency compared to the energy used to drive the flow rate control device because the path that the foreign substances caught in the dust collector must travel to the collecting unit inside the docking station is long.

In addition, there is a problem that the volume of the station itself increases as a separate flow control device is provided.

Prior patent document 3 proposes US Patent Publication No. 2021-0030244. Prior patent document 3 discloses a cleaning system that removes dust from a robot vacuum cleaner.

Prior patent document 3 has a station, and a handheld vacuum cleaner is coupled to one side of the station, and a robot vacuum cleaner is coupled to the other side of the station. The dust bin of the robot vacuum cleaner and the dust bin of the handheld vacuum cleaner are connected to each other, and when the suction motor of the robot vacuum cleaner operates, the dust collected in the dust bin of the robot vacuum cleaner moves to the handheld vacuum cleaner and empties the dust bin of the robot vacuum cleaner.

However, prior patent document 3 also has a problem in that the direction of dust flow is maintained in one direction, and thus, as mentioned above, foreign substances such as hair that are firmly stuck in the dust bin cannot be removed even by prior patent document 3.

Recently, vacuum cleaners exchange necessary information between the charging base and the main body to increase customer convenience. In order to enable high-speed communication, additional wires for data communication are required, which increases the manufacturing cost of the product. In addition, if there is no additional wire, there is a problem in that only two states, ON/OFF, can be transmitted.

In addition, there is a problem that when power is supplied to the cleaning module for communication, only the suction inlet provided with a motor is driven.

### [DETAILED DESCRIPTION OF THE INVENTION]

### [Technical Problem]

Accordingly, one object of the present disclosure is to solve the above-noted disadvantages of the conventional cleaner system and the control method thereof according to the prior art, and to provide a cleaner system that may remove foreign substances such as hair that might stuck in an open end of a dust bin even after collecting dust inside the dust bin.

Another object of the present disclosure is to provide a cleaner system that may remove foreign substances such as hair that may remain stuck in the open end of the cleaner's dust bin while minimizing the energy consumption used to remove them.

A further object of the present disclosure is to provide a cleaner system that may enable information transmission and reception between the cleaning station and the cleaning period without having a separate communication module.

A still further object of the present disclosure is to provide a cleaner system that may enable a cleaner to determine, when coupled thereto, whether it is coupled to a charging station having only a charging function or to a charging station (the cleaner station of the present invention) having an additional dust collection function.

A still further object of the present disclosure is to provide a cleaner system that may enable high-speed data communication using a power cord without adding additional wires between a cleaner body and a charging station, and enables firmware upgrades using this.

A still further object of the present disclosure is to enable firmware upgrade by avoiding operation of a suction inlet equipped only with a motor when power is supplied to a cleaning module for communication.

### [Technical Solution]

To solve the objects of the present disclosure, a cleaner system may include a cleaning module into which external dust is introduced; a cleaner body configured to supply power to the cleaning module through a power supply terminal and generate suction power so that external dust can be introduced through the cleaning module; and a cleaning station on which the cleaner body is mounted, and configured to charge a battery of the cleaner body through a charging terminal, and when connected to the charging terminal, the cleaner body may perform a boot mode for upgrading firmware of the cleaning module.

When connected to the charging terminal, the cleaner body may transmit a message requesting software information to the cleaning module.

The cleaner system may further include a server configured to transmit and receive data with the cleaner, and when receiving software information from the cleaning module, the cleaner body may transmit the software information to the server.

If there is a new firmware version, the server may transmit firmware file to the cleaner body and transmit a message requesting firmware update acceptance to a user terminal.

When receiving a firmware update acceptance message from the user terminal, the server may transmit a message requesting status confirmation of the cleaning module to the cleaner body, and the cleaner body may transmit a message requesting status confirmation to the cleaner module.

When receiving the message requesting status confirmation from the cleaner body, the cleaning module may transmit a status response message to the cleaner body, and the cleaner body may transmit the status response message to the server.

When receiving the status response message from the cleaner body, the server may transmit a message requesting boot mode entry of the cleaning module to the cleaner body, and the cleaner body may transmit a message requesting boot mode entry to the cleaning module.

When receiving a boot mode entry acknowledge response (ACK) message from the cleaning module, the cleaner body may transmit a message requesting communication status confirmation to the cleaner station.

When receiving a communication status acknowledgement (ACK) message from the cleaning module, the cleaner body may transmit a message requesting memory deletion to the cleaning module.

When receiving a memory deletion acknowledgement (ACK) message from the cleaning module, the cleaner body may transmit a memory record request message to the cleaning module.

When receiving a memory record request message from the cleaner, the cleaning module may transmit a memory record response message to the cleaner body.

The cleaner body may repeat a process of transmitting a memory record request message to the cleaning module and receiving a memory record response message from the cleaning module, until the firmware file transmission is completed.

When the firmware file transmission is completed, the cleaner body may transmit a message requesting confirmation of the entire memory checksum to the cleaning module.

When receiving an entire memory checksum response message from the cleaning module, the cleaner body may determine whether the checksum matches and if the checksum matches, it may transmit an update success message to the server.

When receiving an update success acknowledge response (ACK) message from the server, the cleaner body may transmit a disconnection request message to the cleaning module.\

To solve the objects of the present disclosure, a cleaner system according to another embodiment may include a cleaning module configured to suck dust; a cleaner body configured to supply power to the cleaning module through a power supply terminal and generate suction power so that external dust can be introduced through the cleaning module; and a cleaner station on which the cleaner is mounted, and configured to transmit and receive data with the cleaner. The cleaner body may include a power control unit configured to power of the cleaning module; and a power line communication unit configured to transmit and receive data with the cleaning module through the power supply terminal.

The power line communication unit may transmit and receive data with the cleaning station using amplitude shift keying (ASK).

The cleaning module may include a motor; a module control unit configured to control the motor; a module power supply unit configured to receive power through the power supply terminal; and a module communication unit configured to transmit and receive data with the main body through the power supply terminal.

The power supply control unit may include a transistor configured to drive the motor; a gate driver configured to control the transistor; and a main power processor configured to receive a feedback signal from the gate driver.

When charging starts, power may be supplied to the cleaning module, and if a feedback signal is not detected from the cleaning module within a preset first reference time, power to the cleaning module may be cut off.

When a feedback signal is detected from the cleaning module within a preset first reference time, the cleaner body may determine whether a communication ready packet is received from the cleaning module within a preset second reference time.

When receiving a communication ready packet from the cleaning module within a preset second reference time, the cleaner body may transmit a message requesting software information to the cleaning module.

When not receiving the communication ready packet from the cleaning module within a preset second reference time, the cleaner body may turn off the power to the cleaning module.

After supplying power to the cleaning module, the cleaner body may determine the type of the cleaning module based on whether a preset third reference time has elapsed and whether a communication ready packet is received from the cleaning module.

To solve the objects of the present disclosure, a cleaner system according to a further embodiment, a method of updating firmware of a cleaner system comprising a cleaner in which a cleaner body and a cleaning body are combined; and a cleaner station, wherein the cleaner body is configured to supply power to the cleaning module through a power supply terminal and generate suction power so that external dust can be drawn in through the cleaning module, the cleaner station is on which the cleaner body is mounted and configured to charge a battery of the main body through a charging terminal, and the cleaner body comprises a power control unit configured to control the power of the cleaning module; and a power line communication unit configured to transmit and receive data with the cleaning module through a power supply terminal, the method may include a step in which when the cleaner body is connected to the charging terminal of the cleaner station, the cleaner transmits a message requesting software information to the cleaner station; a step in which when receiving software information from the cleaner station, the cleaner transmits the software information to the server; a step in which when receiving a new firmware version, the server transmits a firmware file to the cleaner and transmits a message requesting firmware update acceptance to the user terminal; a step in which when receiving a firmware update acceptance message from the user terminal, the server transmits a message requesting status confirmation of the cleaner station to the cleaner and the cleaner transmits a message requesting status confirmation to the cleaner station; a step in which when receiving a status response message from the cleaner station, the cleaner transmits the status response message to the server; and a step in which when receiving the status response message from the cleaner, the server transmits a message requesting boot mode entry of the cleaner station to the cleaner, and the cleaner transmits a message requesting boot mode entry to the cleaner station.

The method of updating the firmware of the cleaner system may further include a step of turning off the power of the cleaning module, when a communication ready packet is not received from the cleaning module within the preset second reference time,

### [Advantageous Effect]

As described above, according to the embodiments, the cleaner system may enable high-speed data communication using a power cord without additional wires between the cleaner body and the charging stand, and it also may enable firmware upgrades using this.

According to the embodiments, when power is supplied to the cleaning module for communication, the suction port equipped only with the motor is avoided from being driven, thereby enabling a firmware upgrade.

According to the present invention, foreign substances such as hair that may remain stuck in the open end of the dust bin even after collecting dust inside the dust bin can be removed by driving the suction motor of the cleaner. Accordingly, convenience is provided for the user to hygienically manage the cleaner.

Furthermore, according to the embodiments, when removing residual foreign substances such as hair, the dust collection motor is not driven, and only the suction motor of the cleaner is driven to re-suck the residual foreign substances into the dust bin of the cleaner. Accordingly, the residual foreign substances may be effectively removed while minimizing the time and power consumed for this purpose.

Still further, according to the embodiments, the time that consumers are exposed to operating noise may be reduced by removing residual foreign substances by operating for a short time.

Still further, according to the embodiments, residual foreign substances that are difficult to remove by applying suction force alone, i.e., residual foreign substances that must be manually removed by the user, are re-sucked into the dust bin of the cleaner and stored, thereby providing convenience for the user to directly manage them later.

Still further, according to the embodiments, the cleaner may distinguish and determine the type of charging station to which it is connected by using the pulse signal transmitted from the cleaner station to the cleaner. Accordingly, the cleaner may determine by itself whether to perform the subsequent operation for re-absorbing the above-described residual foreign substances.

Still further, according to the embodiments, since communication between the cleaner station and the cleaner is performed through a power line that provides power, information transmission and reception between the cleaner station and the cleaner is possible without the need for a separate communication module.

### [Description of Drawings]

FIG. 1 is a perspective view of a cleaner system including a cleaner station and a cleaner according to embodiments;
FIG. 2 is a schematic view of the configuration of a cleaner system according to embodiments;
FIG. 3 is a view to describe a cleaner in a cleaner system according to embodiments;
FIG. 4 is a view to describe a dust separation unit and a cyclone filter of a cleaner according to embodiments;
FIG. 5a is a view to describe a lower portion of a dust bin of a cleaner according to embodiments;
FIG. 5b is a view to describe a battery terminal of a cleaner according to embodiments;
FIG. 6 is a view to describe a mounting part in a cleaner station according to embodiments;
FIG. 7 is a perspective view to describe a fixing unit in a cleaner station according to embodiments;
FIG. 8 is a view to describe the relationship between a cleaner and a door unit in a cleaner station according to embodiments;
FIG. 9 is a view to describe the relationship between a cleaner and a cover opening unit in a cleaner station according to embodiments;
FIG. 10 is a block diagram of a cleaner station provided in a cleaner system according to embodiments;
FIG. 11 is a view showing a circuit configuration for power line communication between a cleaner station and a cleaner;
FIG. 12 is a block view of a cleaner provided in a cleaner system according to embodiments;
FIG. 13 is a block view of a cleaner system according to embodiments;
FIGS. 14 and 15 are views showing circuit configurations for communication between a cleaner station and a cleaner according to embodiments;
FIG. 16 is a view showing a circuit configuration of a power control unit according to embodiments;
FIG. 17 is a view showing a circuit configuration of a power supply unit according to embodiments;
FIG. 18 is a view to describe a communication method in an application area between a cleaner and a cleaner station according to embodiments;
FIGS. 19a and 19b are views to describe a firmware update method between a cleaner and a cleaner station according to embodiments;
FIG. 20 is a view to describe a method of determining a cleaning module with a power supply capacitor and a cleaning module without a power supply capacitor according to embodiments; and
FIG. 21 is a view to describe a method of determining a cleaning module after power is applied to the cleaning module according to embodiments of the present invention.

### [DESCRIPTION OF SPECIFIC EMBODIMENTS]

Description will now be given in detail according to exemplary embodiments disclosed herein, with reference to the accompanying drawings.

The present disclosure may be variously modified and may have various embodiments, and particular embodiments illustrated in the drawings will be specifically described below. The description of the embodiments is not intended to limit the present disclosure to the particular embodiments, but it should be interpreted that the present disclosure is to cover all modifications, equivalents and alternatives falling within the spirit and technical scope of the present disclosure.

Terminology that is used in the present disclosure is limited to only for embodiments herewith but made only to make it easy to understand the present disclosure. A singular representation may include a plural representation unless it represents a definitely different meaning from the context. In understanding the components, it should be understood as including the error range even if there is no separate explicit description.

Unless otherwise defined, all terms used herein, including technical or scientific terms, have the same meaning as commonly understood by one of ordinary skill in the art to which the present invention belongs. Terms defined in commonly used dictionaries, such as those defined in common dictionaries, may be interpreted as having a meaning consistent with the meaning they have in the context of the relevant art, and may not be interpreted in an idealized or overly formal sense, unless explicitly defined in this application.

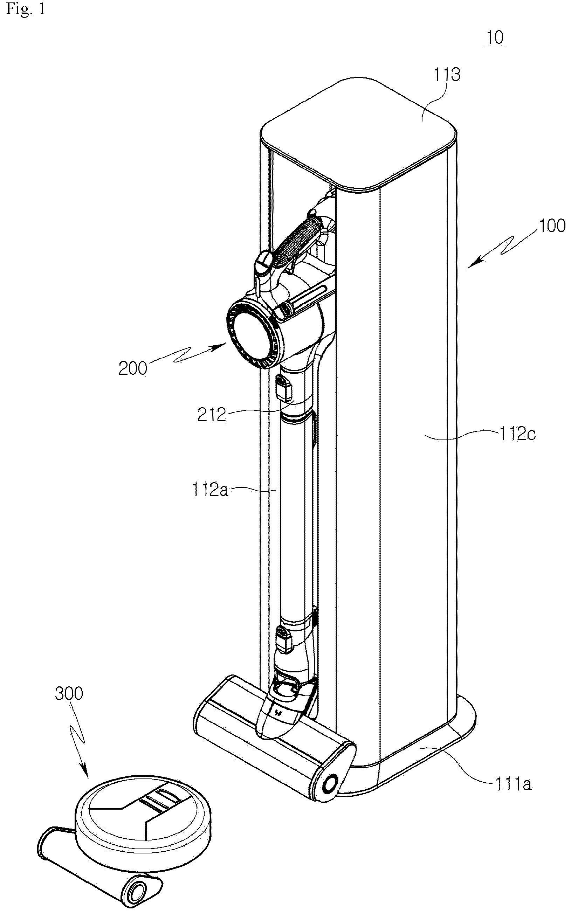

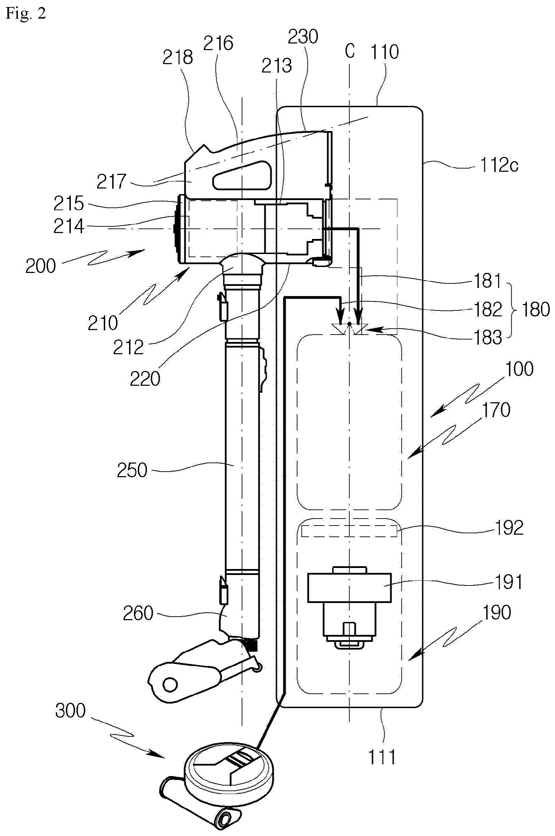

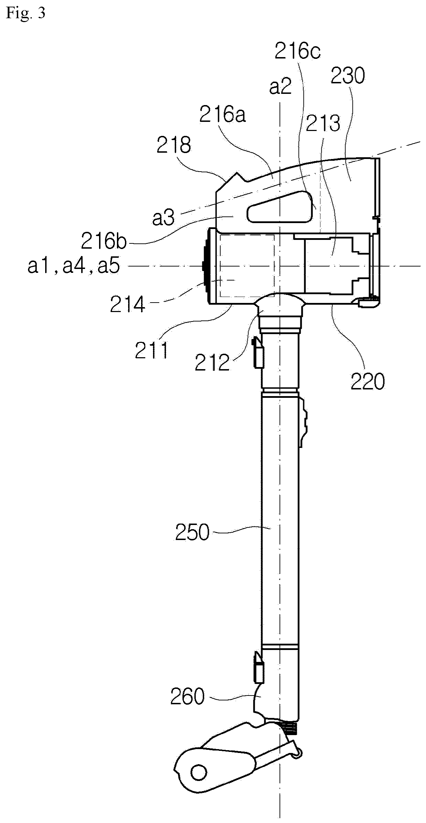

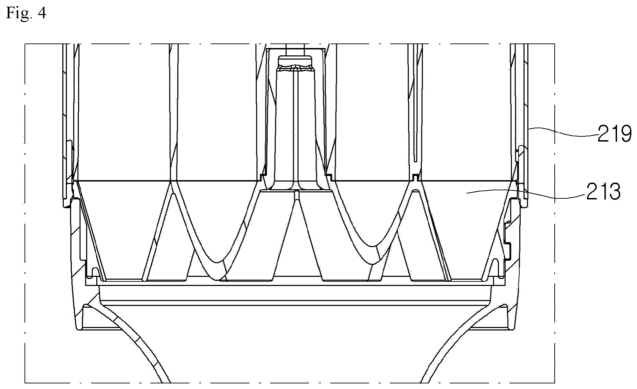

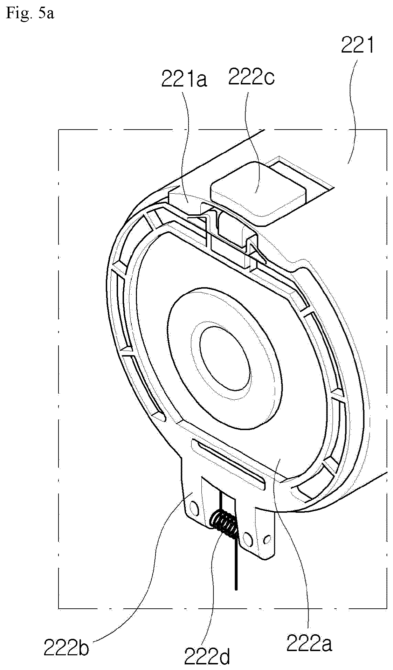

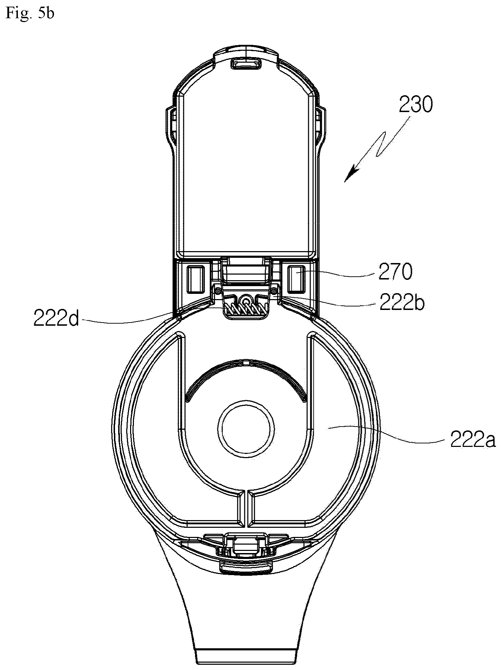

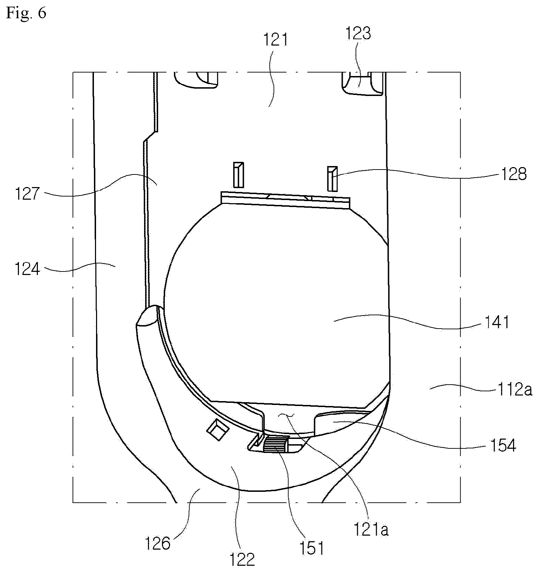

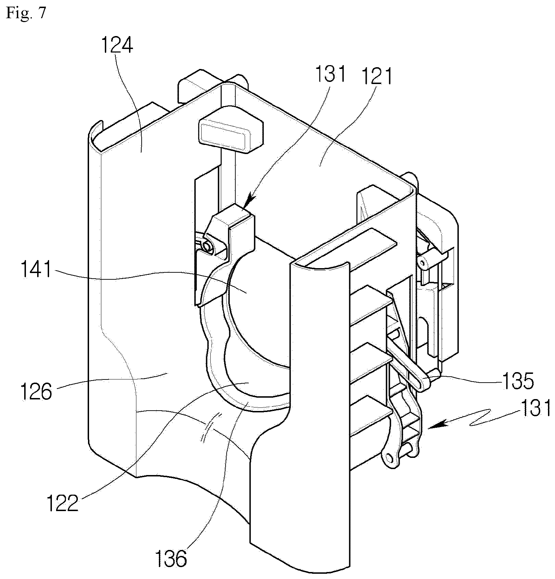

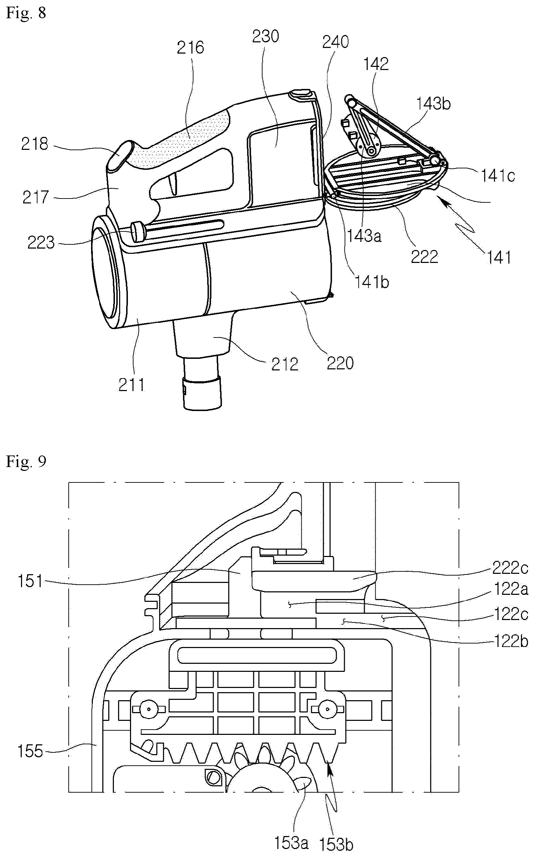

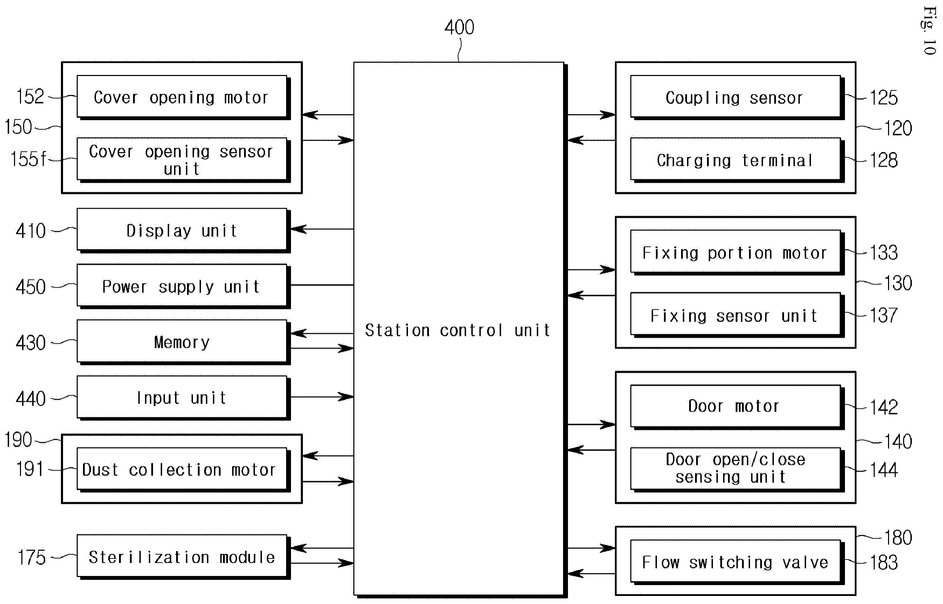

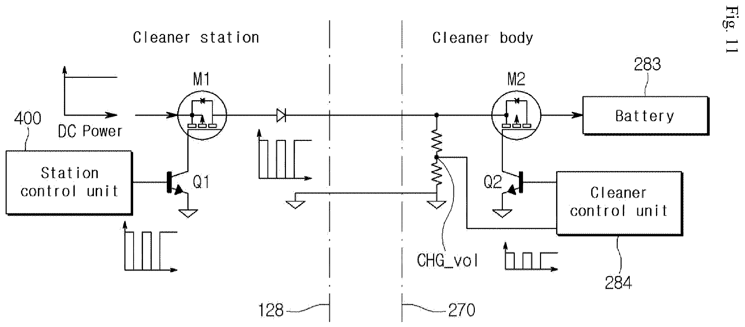

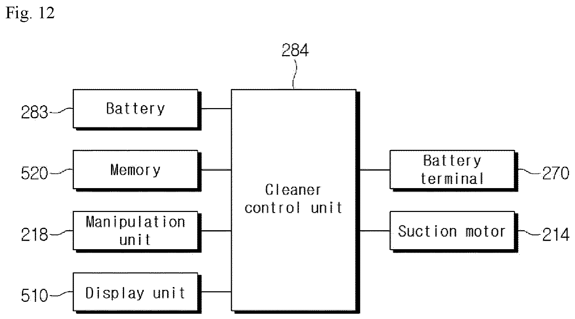

FIG. 1 is a perspective view of a cleaner system including a cleaner station and a cleaner according to embodiments. FIG. 2 is a schematic view of the configuration of a cleaner system according to embodiments. FIG. 3 is a view to describe a cleaner in a cleaner system according to embodiments. FIG. 4 is a view to describe a dust separation unit and a cyclone filter of a cleaner according to embodiments. FIG. 5a is a view to describe a lower portion of a dust bin of a cleaner according to embodiments. FIG. 5b is a view to describe a battery terminal of a cleaner according to embodiments. FIG. 6 is a view to describe a mounting part in a cleaner station according to embodiments. FIG. 7 is a perspective view to describe a fixing unit in a cleaner station according to embodiments. FIG. 8 is a view to describe the relationship between a cleaner and a door unit in a cleaner station according to embodiments. FIG. 9 is a view to describe the relationship between a cleaner and a cover opening unit in a cleaner station according to embodiments. FIG. 10 is a block diagram of a cleaner station provided in a cleaner system according to embodiments. FIG. 11 is a view showing a circuit configuration for power line communication between a cleaner station and a cleaner. FIG. 12 is a block view of a cleaner provided in a cleaner system according to embodiments.

Referring to FIGS. 1 and 2, a cleaner system 10 according to one embodiment may include a cleaner station 100 and a cleaner 200. In this embodiment, some of these configurations may be excluded and additional configurations are not excluded.

The cleaner system 10 may include the cleaner station 100. A cleaner 200 and a robot cleaner 300 may be coupled to the cleaner station 100. The cleaner 200 may be coupled to a side of the cleaner station 100. Specifically, a cleaner body of the cleaner 200 may be coupled to a side of the cleaner station 100. The robot cleaner 300 may be coupled to a lower portion of the cleaner station 100. The cleaner station 100 may remove dust from a dust bin 220 of the cleaner 200. The cleaner station 100 may remove dust from the dust bin (not shown) of the robot cleaner 300.

The structure of the cleaner 200 will be described with reference to FIGS. 1 to 5 as follows.

The cleaner 200 may mean a cleaner that is manually operated by a user. For example, the cleaner 200 may mean a hand vacuum cleaner or a stick vacuum cleaner.

The cleaner 200 may be mounted on the cleaner station 100. The cleaner 200 may be supported by the cleaner station 100. The cleaner 200 may be coupled to the cleaner station 100.

In one embodiment of the present disclosure, the direction may be defined based on the time when the bottom surface (lower surface) of a dust bin 220 and a battery housing 230 are placed on the ground.

At this time, the front may refer to the direction in which a suction port 212 is arranged based on a suction motor 214, and the rear may refer to the direction in which a handle 216 is arranged. In addition, the direction in which the suction port 212 is arranged on the right when viewed from the suction motor 214 may be referred to as the right, and the direction in which the suction port 212 is arranged on the left may be referred to as the left. In addition, in one embodiment, the upper and lower sides may be defined along the direction perpendicular to the ground when the bottom surface (lower surface) of the dust bin 220 and the battery housing 230 are placed on the ground.

The cleaner 200 may include a cleaner body 210. The cleaner body 210 may include a cleaner body housing 211, a suction port 212, a dust separation unit 213, a suction motor 214, an air discharge cover 215, a handle 216, and a manipulation unit 218.

The cleaner body housing 211 may form the exterior of the cleaner 200. The cleaner body housing 211 may provide a space that may accommodate the suction motor 214 and a filter (not shown) inside. The cleaner body housing 211 may be configured in a shape similar to a cylinder.

The suction port 212 may protrude outwardly from the cleaner body housing 211. For example, the suction port 212 may be formed in a cylindrical shape with an open interior. The suction port 212 may be combined with an extension pipe 250. The suction port 212 may provide a path (hereinafter, referred to as a 'suction path') through which air containing dust may flow.

In the present embodiment, a virtual line penetrating the interior of the suction port 212 configured in a cylindrical shape may be formed. That is, a virtual suction path penetration line a2 penetrating the suction path in the longitudinal direction may be formed.

The dust separation unit 213 may be connected to the suction port 212. The dust separation unit 213 may separate dust sucked into the interior through the suction port 212. The space inside the dust separation unit 213 may be connected to the space inside the dust bin 220.

For example, the dust separation unit 213 may be provided with at least two cyclone units that may separate dust by cyclone flow. In addition, the space inside the dust separation unit 213 may be connected to the suction path. Therefore, the air and dust sucked through the suction port 212 flow spirally along the inner surface of the dust separation unit 213. Therefore, cyclone flow may occur in the inner space of the dust separation unit 213.

The dust separation unit 213 is connected to the suction port 212 and is configured to apply the principle of a dust collector that uses centrifugal force to separate dust sucked into the interior of the cleaner body 210 through the suction port 212.

As an example, the dust separation unit 213 may include at least one cyclone that can separate dust by cyclone flow. The cyclone may be connected to the suction port 212. Air and dust sucked through the suction port 212 flow spirally along the inner surface of the cyclone.

The dust separation unit 213 may further include a secondary cyclone that re-separates dust from air discharged from the cyclone. At this time, the secondary cyclone may be located inside the cyclone so that the size of the dust separation unit is minimized. The secondary cyclone may include a plurality of cyclone bodies arranged in parallel. The air discharged from the cyclone may be divided and passed through the plurality of cyclone bodies.

At this time, the axis of the cyclone flow of the secondary cyclone may also extend in the vertical direction, and the axis of the cyclone flow of the cyclone and the axis of the cyclone flow of the secondary cyclone may form a coaxial line in the vertical direction, which may be collectively referred to as the axis of the cyclone flow of the dust separation unit 213. Meanwhile, in the present embodiment, a virtual cyclone line a4 may be formed with respect to the axis of the cyclone flow described above.

The dust separation unit 213 may further include a cyclone filter 219 arranged to surround the secondary cyclone unit. The cyclone filter 219 is formed in a cylindrical shape, for example, and guides air separated from dust in the cyclone to the secondary cyclone. The cyclone filter 213a may filter dust as air passes through it.

To this end, the cyclone filter 219 may include a mesh portion having a plurality of holes. The mesh portion may be formed of a metal material, but the embodiments are not limited thereto.

The suction motor 214 may generate a suction force to suck in air including dust. The suction motor 214 may be accommodated in the cleaner body housing 211. The suction motor 214 may generate a suction force by rotating to draw air into the dust bin 220. For example, the suction motor 214 may be provided in a similar cylindrical shape.

In this embodiment, a virtual suction motor axis a1 may be formed by extending the rotation axis of the suction motor 214.

The air discharge cover 215 may be arranged on one axial side of the cleaner body housing 211. The air discharge cover 215 may accommodate a filter for filtering air. For example, the air discharge cover 215 may accommodate a HEPA filter.

The air discharge cover 215 may be formed with an air discharge port for discharging air sucked in by the suction force of the suction motor 214.

A flow guide may be arranged on the air discharge cover 215. The flow guide may guide the flow of air discharged through the air discharge hole.

The handle 216 may be held by the user. The handle 216 may be arranged at the rear of the suction motor 214. For example, the handle 216 may be formed in a similar cylindrical shape. Alternatively, the handle 216 may be formed in a curved cylindrical shape. The handle 216 may be arranged at a predetermined angle with the cleaner body housing 211, the suction motor 214, or the dust separation unit 213.

The handle 216 may include a grip portion 216a formed in a column shape so that a user can hold it, a first extension portion 216b connected to one end of the grip portion 216a in the longitudinal direction (axial direction) and formed to extend toward the suction motor 214, and a second extension portion 216c connected to the other end of the grip portion 216a in the longitudinal direction (axial direction) and formed to extend toward the dust bin 220.

In this embodiment, a virtual grip penetration line a3 may be formed by extending along the longitudinal direction (axis direction of the column) of the grip portion 216a and penetrating the grip portion 216a.

As an example, the grip penetration line a3 may be a virtual line formed inside the cylindrical handle 216, and may be a virtual line formed parallel to at least a portion of the outer surface (outer circumference) of the grip portion 216a.

The upper surface of the handle 216 may form a part of the outer appearance of the upper surface of the cleaner 200. Through this, when the user grips the handle 216, it is possible to prevent one component of the cleaner 200 from coming into contact with the user's arm.

The first extension portion 216b may extend from the grip portion 216a toward the cleaner body housing 211 or the suction motor 214. At least a portion of the first extension portion 216b may extend in a horizontal direction.

The second extension portion 216c may extend from the grip portion 216a toward the dust bin 220. At least a portion of the second extension portion 216c may extend in a horizontal direction.

The manipulation unit 218 may be arranged on the handle 216. The manipulation unit 218 may be arranged on an inclined surface formed in an upper area of the handle 216. The user may input an operation or stop command of the cleaner 200 through the manipulation unit 218.

The cleaner 200 may include a dust bin 220. The dust bin 220 may be connected to the dust separation unit 213. The dust bin 220 may store dust separated from the dust separation unit 213.

The dust bin 220 may include a dust bin body 221, a discharge cover 222, a dust bin compression lever 223, and a compressor (not shown).

The dust bin body 221 may provide a space for storing dust separated from the dust separation unit 213. For example, the dust bin body 221 may be formed in a similar cylindrical shape.

In this embodiment, a virtual dustbin penetration line a5 may be formed by penetrating the inside (internal space) of the dustbin body 221 and extending along the longitudinal direction of the dustbin body 221 (meaning the axial direction in the cylindrical dustbin body 221.

A lower surface (bottom surface) of one side of the longitudinal direction of the dustbin body 221 may be partially open. In addition, a lower extension portion 221a may be formed on the lower surface (bottom surface) of the dustbin body 221. The lower extension portion 221a may be formed to block a part of the lower surface of the dustbin body 221.

The dust bin 220 may include a discharge cover 222. The discharge cover 222 may be arranged on the lower surface of the dust bin 220.

The discharge cover 222 may be provided to open and close one end of the longitudinal direction of the dustbin body 221. Specifically, the discharge cover 222 is rotatably coupled to the open one end of the dustbin body 221 and may selectively open and close the lower part of the dustbin 220.

The discharge cover 222 may include a cover body 222a and a hinge 222b. The cover body 222a may be formed to block a portion of the lower surface of the dust bin body 221. The cover body 222a may rotate downward based on the hinge 222b. The hinge 222b may be arranged adjacent to the battery housing 230.

The dust bin 220 may include a torsion spring 222d. The torsion spring 222d is arranged on the rotation axis of the discharge cover 222 that rotates with respect to the dust bin body 221 and can apply elastic force (or restoring force) in the direction in which the discharge cover 222 is opened. Therefore, when the discharge cover 222 is separated from the dust bin body 221, the cover body 222a may be supported in a state in which it is rotated by a predetermined angle or more about the hinge 222b as an axis in the dust bin body 221 by the elastic force of the torsion spring 222d.

The discharge cover 222 may be combined with the dust bin 220 through a hook connection. Meanwhile, the discharge cover 222 may be separated from the dust bin 220 through a coupling lever 222c. The coupling lever 222c may be arranged in front of the dust bin 220. Specifically, the coupling lever 222c) may be arranged on the outer surface of the front side of the dust bin 220. When an external force is applied, the coupling lever 222c may elastically deform the hook formed in the cover body 222a to release the hook connection between the cover body 222a and the dust bin body 221.

When the discharge cover 222 is closed, the lower surface of the dust bin 220 may be blocked (sealed) by the discharge cover 222 and the lower extension 221a.

The dust bin 220 may include a dustbin compression lever 223 (see FIG. 8). The dustbin compression lever 223 may be arranged on the outside of the dust bin 220 or the dust separation unit 213. The dust bin compression lever 223 may be arranged to move up and down on the outside of the dust bin 220 or the dust separation unit 213. The dust bin compression lever 223 may be connected to a compressor (not shown). When the dust bin compression lever 223 moves downward by an external force, the compressor (not shown) can also move downward. Through this, convenience for the user can be provided. The compressor (not shown) and the dust bin compression lever 223 may return to their original positions by an elastic member (not shown). Specifically, when the external force applied to the dust bin compression lever 223 is removed, the elastic member can move the dustbin compression lever 223 and the compressor (not shown) upward.

A compressor (not shown) may be placed inside the dust bin body 221. The compressor may move in the internal space of the dust bin body 221. Specifically, the compressor may move up and down inside the dust bin body 221. Through this, the compressor may compress dust inside the dust bin body 221 downward. In addition, when the discharge cover 222 is separated from the dust bin body 221 and the lower part of the dustbin 220 is opened, the compressor may move from the upper part of the dustbin 220 to the lower part to remove foreign substances such as residual dust inside the dustbin 220. Through this, the suction power of the cleaner may be improved by preventing residual dust from remaining inside the dustbin 220. In addition, by preventing residual dust from remaining inside the dustbin 220, an unpleasant odor caused by residual substances may be eliminated.

The cleaner 200 may include a battery housing 230. The battery housing 230 may accommodate a battery 283. The battery housing 230 may be placed on the lower side of the handle 216. For example, the battery housing 230 may have a hexahedral shape with an open bottom. The rear of the battery housing 230 may be connected to the handle 216.

The battery housing 230 may include a receiving portion that opens downward. The battery 283 may be detached through the receiving portion of the battery housing 230.

The battery housing 230 may be provided with a battery terminal 270 that is exposed to the outside. (See FIG. 5b) When the battery terminal 270 and the charging terminal 128 of the cleaner station 100 are coupled, power may be supplied from the cleaner station 100 to the battery 283 of the cleaner 200 through the battery terminal 270. The battery terminals 270 may be arranged spaced apart from each other on the lower surface of the battery housing 230, and the distance between the battery terminals 270 may be substantially the same as the distance between the charging terminals 283.

The cleaner 200 may include a battery 283.

For example, the battery 283 may be detachably coupled to the cleaner 200. The battery 283 may be detachably coupled to the battery housing 230. For example, the battery 283 may be inserted into the inside of the battery housing 230 from the lower side of the battery housing 230. With this configuration, the portability of the cleaner 200 may be improved.

Alternatively, the battery 283 may be integrally provided inside the battery housing 230. At this time, the lower surface of the battery 283 is not exposed to the outside.

The battery 283 may supply power to the suction motor 214 of the cleaner 200. The battery 283 may be placed at the bottom of the handle 216. The battery 283 may be placed at the rear of the dust bin 220. That is, the suction motor 214 and the battery 283 are placed so as not to overlap in the vertical direction, and the placement heights may also be different. With respect to the handle 216, the suction motor 214, which is heavy, is placed in front of the handle 216, and the battery 283, which is heavy, is placed below the handle 216, so that the weight of the cleaner 200 may be evenly distributed. Through this, when the user holds the handle 216 and cleans, the user's wrist can be prevented from being strained.

According to one embodiment, when the battery 283 is coupled to the battery housing 230, the lower surface of the battery 283 may be exposed to the outside. When the cleaner 200 is placed on the floor, the battery 283 may be placed on the floor, so that the battery 283 may be immediately separated from the battery housing 230. In addition, since the lower surface of the battery 283 is exposed to the outside and comes into direct contact with the external air of the battery 283, the cooling performance of the battery 283 may be improved.

Meanwhile, when the battery 283 is integrally fixed to the battery housing 230, the structure for attaching and detaching the battery 283 and the battery housing 230 may be reduced, so that the overall size of the cleaner 200 may be reduced and its weight may be reduced.

The cleaner 200 may include an extension pip 250. The extension pipe 250 may be connected to the cleaning module 260. The extension pipe 250 may be connected to the cleaner body 210. The extension pipe 250 may be connected to the suction port 212 of the cleaner body 210. The extension pipe 250 may be formed in a long cylindrical shape.

The cleaner body 210 may be connected to the extension pipe 250. The cleaner body 210 may be connected to the cleaning module 260 through the extension pipe 250. The cleaner body 210 may generate suction force through the suction motor 214 and provide suction force to the cleaning module 260 through the extension pipe 250. External dust may be introduced into the cleaner body 210 through the cleaning module 260 and the extension pipe 250.

The cleaner 200 may include a cleaning module 260. The cleaning module 260 may be connected to the extension pipe 250. Therefore, external air may be introduced into the cleaner body 210 of the cleaner 200 through the cleaning module 260 and the extension pipe 250 by the suction force generated from the cleaner body 210 of the cleaner 200.

Dust in the dust bin 220 of the cleaner 200 may be collected by the dust collection unit 170 of the cleaner station 100 by gravity and the suction force of the dust collection motor 191. Through this, dust in the dust bin may be removed without a separate operation by the user, thereby providing user convenience. In addition, the inconvenience of the user having to empty the dust bin every time can be eliminated. In addition, dust may be prevented from flying when the dust bin is emptied.

The cleaner 200 may be coupled to the side of the housing 110. Specifically, the cleaner body 210 of the cleaner 200 may be mounted on the coupling portion 120. More specifically, the dust bin 220 and the battery housing 230 of the cleaner 200 may be coupled to the coupling surface 121, the outer surface of the dust bin main body 221 may be coupled to the dust bin guide surface 122, and the suction port 212 may be coupled to the suction portion guide surface 126 of the coupling portion 120. In this case, the central axis of the dust bin 220 may be arranged in a direction parallel to the ground, and the extension pipe 250 may be arranged along a direction perpendicular to the ground (see FIG. 2).

The cleaner system 10 may include a robot cleaner 300. The robot cleaner 300 may automatically clean the area to be cleaned by driving around the area to be cleaned and sucking up foreign substances such as dust from the floor. The robot cleaner 300 may include a distance sensor that detects the distance to obstacles such as furniture, office supplies, or walls installed in the cleaning area, and a left wheel and a right wheel for moving the robot cleaner. The robot cleaner 300 may be coupled to the cleaner station 100. Dust inside the robot cleaner 300 may be collected by the dust collection unit 170 through the second suction path 182.

Referring to FIGS. 1 and 2, the cleaner station 100 of the present disclosure is described as follows.

The cleaner 200 and the robot cleaner 300 may be placed in the cleaner station 100. The cleaner 200 may be coupled to the side of the cleaner station 100. Specifically, the cleaner body of the cleaner 200 may be coupled to the side of the cleaner station 100. The robot cleaner 300 may be coupled to the lower part of the cleaner station 100. The cleaner station 100 may remove dust from the dust bin 220 of the cleaner 200. The cleaner station 100 may remove dust from the dust bin (not shown) of the robot cleaner 300.

The cleaner station 100 may include a housing 110. The housing 110 may form the exterior of the cleaner station 100. Specifically, the housing 110 may be formed in a columnar shape including at least one outer wall surface. For example, the housing 110 may be formed in a shape similar to a square column.

The housing 110 may be provided with an internal space that accommodates the dust collection unit 170 that stores dust inside, a dust suction module 190 that generates a fluid force for collecting dust by the dust collection unit 170, and a suction path 181 through which dust emitted from the dust bin 220 may flow.

The housing 110 may include a bottom surface 111, an outer wall surface 112, and an upper surface 113.

The bottom surface 111 may support the lower side of the dust suction module 190 in the direction of gravity. That is, the bottom surface 111 may support the lower side of the dust collection motor 191 of the dust suction module 190.

At this time, the bottom surface 111 may be arranged toward the ground. The bottom surface 111 may be arranged parallel to the ground, and may also be arranged at a certain angle with the ground. With this configuration, the dust collection motor 191 may be stably supported, and even when the cleaner 200 is combined, there is an advantage in that the overall weight can be balanced.

Meanwhile, according to the embodiment, the bottom surface 111 may further include a ground support portion 111a that increases the area in contact with the ground in order to prevent the cleaner station 100 from falling over and maintain balance. For example, the ground support portion may be a plate shape formed by extending from the bottom surface 111, and one or more frames may be formed by protruding and extending along the ground direction from the bottom surface 111.

The outer wall surface 112 may mean a surface formed along the direction of gravity, and may mean a surface connected to the floor surface 111. For example, the outer wall surface 112 may mean a surface vertically connected to the floor surface 111. In another embodiment, the outer wall surface 112 may also be arranged to be inclined at a predetermined angle with the floor surface 111.

The outer wall surface 112 may be configured to include at least one surface. For example, the outer wall surface 112 may include a first outer wall surface 112a, a second outer wall surface 112b, a third outer wall surface 112c, and a fourth outer wall surface 112d.

At this time, in the present embodiment, the first outer wall surface 112a may be arranged on the front of the cleaner station 100. Here, the front side may mean the surface where the cleaner 200 is exposed when the cleaner 200 is coupled to the cleaner station 100. Therefore, the first outer wall surface 112a may form the appearance of the front side of the cleaner station 100.

Meanwhile, for the purpose of understanding the present embodiment, the direction is defined as follows. In the present embodiment, the direction may be defined when the cleaner 200 is coupled to the cleaner station 100.

When the cleaner 200 is coupled to the cleaner station 100, the direction in which the cleaner 200 is exposed to the outside of the cleaner station 100 may be called the front.

From another perspective, when the cleaner 200 is coupled to the cleaner station 100, the direction in which the suction motor 214 of the cleaner 200 is arranged may be called the front. And the direction opposite to the direction in which the suction motor 214 is arranged in the cleaner station 100 may be called the rear.

From another perspective, the direction in which the intersection point where the gripper penetration line a3 and the suction motor axis line a1 intersect with respect to the cleaner station 100 is arranged may be called the front. Or, the direction in which the intersection point P2 where the grip portion penetration line a3 and the suction path penetration line a2 intersect is arranged may be called the front. Or, the direction in which the intersection point P1 where the suction motor axis line a1 and the suction pash penetration line a2 intersect is arranged may be called the front. And the direction opposite to the direction in which the above-mentioned intersection is arranged based on the cleaner station 100 may be called the rear.

And, the side facing the front based on the internal space of the housing 110 may be called the rear of the cleaner station 100. Therefore, the rear may mean the direction in which the second outer wall surface 112b is formed.

when looking at the front based on the internal space of the housing 110, the left side may be called the left side, and the right side may be called the right side. Therefore, the left side can mean the direction in which the third outer wall surface 112c is formed, and the right side can mean the direction in which the fourth outer wall surface 112d is formed.

The first outer wall surface 112a may be formed in a flat shape, as well as in an entirely curved shape, and can be formed by including a curved surface in a part.

The first outer wall surface 112a may have an appearance corresponding to the shape of the cleaner 200. Specifically, the coupling portion 120 may be arranged on the first outer wall surface 112a. With this configuration, the cleaner 200 may be coupled to the cleaner station 100 and supported by the cleaner station 100. The specific configuration of the coupling part 120 will be described later.

A structure for mounting various types of cleaning modules used in the cleaner 200 may also be added to the first outer wall surface 112a.

In addition, a structure to which the robot cleaner 300 may be coupled may be added to the first outer wall surface 112a. Therefore, a structure corresponding to the shape of the robot cleaner 300 may be added to the first outer wall surface 112a.

In addition, a cleaner bottom plate (not shown) to which the lower surface of the robot cleaner 300 may be coupled may be additionally coupled to the first outer wall surface 112a. Meanwhile, in another embodiment, the cleaner bottom plate (not shown) may be formed in a form connected to the bottom surface 111.

In this embodiment, the second outer wall surface 112b may be a surface facing the first outer wall surface 112a. That is, the second outer wall surface 112b may be arranged at the rear of the cleaner station 100. Here, the rear surface may be a surface facing the surface to which the cleaner 200 or the robot cleaner 300 is coupled. Therefore, the second outer wall surface 112b may form the exterior of the rear of the cleaner station 100.

As an example, the second outer wall surface 112b may be formed in a flat shape. By this configuration, the cleaner station 100 may be attached to the indoor wall, and the cleaner station 100 may be stably supported.

As another example, a structure for mounting various types of cleaning modules 290 used in the cleaner 200 may be added to the second outer wall surface 112b.

In addition, a structure to which the robot cleaner 300 may be coupled can be added to the second outer wall surface 112b. Accordingly, a structure corresponding to the shape of the robot cleaner 300 may be added to the second outer wall surface 112b.

In addition, a cleaner bottom plate (not shown) to which the lower surface of the robot cleaner 300 may be coupled may be additionally coupled to the second outer wall surface 112b. Meanwhile, in another embodiment, the cleaner bottom plate (not shown) may be formed in a form connected to the bottom surface 111. With this configuration, when the robot cleaner 300 is coupled to the cleaner bottom plate (not shown), the overall center of gravity of the cleaner station 100 may be lowered to stably support the cleaner station 100.

n this embodiment, the third outer wall surface 112c and the fourth outer wall surface 112d may mean surfaces connecting the first outer wall surface 112a and the second outer wall surface 112b. At this time, the third outer wall surface 112c may be placed on the left side of the station 100, and the fourth outer wall surface 112d may be placed on the right side of the cleaner station 100. Alternatively, the third outer wall surface 112c may be placed on the right side of the cleaner station 100, and the fourth outer wall surface 112d may be placed on the left side of the cleaner station 100.

The third outer wall surface 112c or the fourth outer wall surface 112d may be formed in a flat shape, or may be formed in an overall curved shape, or may be formed by including a curved surface in a portion.

A structure for mounting various types of cleaning modules used in the cleaner 200 may also be added to the third outer wall surface 112c or the fourth outer wall surface 112d.

In addition, a structure to which the robot cleaner 300 may be coupled may be added to the third outer wall surface 112c or the fourth outer wall surface 112d. Accordingly, a structure corresponding to the shape of the robot cleaner 300 may be added to the third outer wall surface 112c or the fourth outer wall surface 112d.

In addition, a cleaner bottom plate (not shown) to which the lower surface of the robot cleaner 300 may be coupled may be additionally coupled to the third outer wall surface 112c or the fourth outer wall surface 112d. Meanwhile, in another embodiment, the cleaner bottom plate (not shown) may be formed in a form connected to the bottom surface 111.

The upper surface 113 may form the upper exterior of the cleaner station. That is, the upper surface 113 may mean the surface that is positioned at the uppermost side in the direction of gravity in the cleaner station and is exposed to the outside.

For reference, in this embodiment, the upper side and the lower side may mean the upper side and the lower side, respectively, along the direction of gravity (the direction perpendicular to the ground) when the cleaner station 100 is installed on the ground.

At this time, the upper surface 113 may be positioned parallel to the ground, or may be positioned at a predetermined angle with the ground.

A display unit 410 may be positioned on the upper surface 113. For example, the display unit 410 may display the status of the cleaner station 100, the status of the cleaner 200, and/or the status of the robot cleaner 300, and may also display information such as the cleaning progress status and a map of the cleaning area.

According to one embodiment, the upper surface 113 may be provided to be detachable from the outer wall surface 112. At this time, when the upper surface 113 is detached, the internal space surrounded by the outer wall surface 112 may accommodate a battery detached from the cleaner 200, 300, and a terminal (not shown) capable of charging the detached battery may be provided.

Referring to FIG. 2 and FIG. 6, the coupling portion 120 of the cleaner station 100 of the present disclosure will be described as follows.

The cleaner station 100 may include the coupling portion (120) for the cleaner 200 to be fixed and coupled. Specifically, the coupling portion 120 may be arranged on the first outer wall surface 112a, and the cleaner body 210, dust bin 220, and battery housing 230 of the cleaner 200 may be coupled.

The coupling portion 120 may include a coupling surface 121. The coupling surface 121 may be arranged on the side of the housing 110. For example, the coupling surface 121 may mean a surface formed in a concave groove shape toward the inside of the cleaner station 100 on the first outer wall surface 112a. That is, the coupling surface 121 may mean a surface formed by forming a single unit with the first outer wall surface 112a.

The cleaner 200 may be coupled to the coupling surface 121. For example, the coupling surface 121 may be in contact with the lower surface of the dust bin 220 and the battery housing 230 of the cleaner 200. Here, the lower surface may mean a surface facing the ground when the user uses the cleaner 200 or places it on the ground.

For example, the angle formed by the coupling surface 121 with the ground may be a right angle. Through this, when the cleaner 200 is coupled to the coupling surface 121, the space of the cleaner station 100 may be minimized.

As another example, the coupling surface 121 may be arranged to be inclined at a predetermined angle with respect to the ground. Through this, when the cleaner 200 is coupled to the coupling surface 121, the cleaner station 100 may be stably supported.

A dust passage hole 121a may be formed in the coupling surface 121 so that air from the outside of the housing 110 may flow into the inside. The dust passage hole 121a may be formed in a hole shape corresponding to the shape of the dust bin 220 so that dust in the dust bin 220 may flow into the dust collection unit 170. The dust passage hole 121a may be formed corresponding to the shape of the discharge cover 222 of the dust bin 220. The dust passage hole 121a may be formed to communicate with the first suction path 181 to be described later.

The coupling portion 120 may include a dust bin guide surface 122. The dustbin guide surface 122 may be arranged on the first outer wall surface 112a. The dustbin guide surface 122 may be connected to the first outer wall surface 112a. In addition, the dustbin guide surface 122 may be connected to the coupling surface 121.

The dustbin guide surface 122 may be formed in a shape corresponding to the outer surface of the dustbin 220. The front outer surface of the dustbin 220 may be coupled to the dustbin guide surface 122. Through this, convenience may be provided for the cleaner 200 to be coupled to the coupling surface 121.

A protrusion moving hole 122a may be formed on the dustbin guide surface 122, and a push protrusion 151 to be described later may be linearly moved along the protrusion moving hole 122a. In addition, a gear box 155 may be provided on the lower side of the gravity direction of the dustbin guide surface 122 to accommodate a gear of a cover opening unit 150 to be described later. At this time, a guide space 122b in which a push projection 151 may move can be formed between the dustbin guide surface 122 and the lower surface and the upper surface of the gear box 155. In addition, the guide space 122b may be connected to the first suction path 181 through the bypass hole 122c. That is, the protrusion moving hole 122a, the guide space 122b, the bypass hole 122c, and the first suction path 181 may form one bypass path (see FIG. 9). With this configuration, when the dust collection motor 191 is operated while the dustbin 220 is connected to the coupling portion 120, there is an advantage in that dust remaining in the dustbin 220 and the dustbin guide surface 122 may be sucked through the bypass path.

The coupling portion 120 may include a guide protrusion 123. The guide protrusion 123 may be arranged on the coupling surface 121. The guide protrusion 123 may protrude upward from the coupling surface 121. The guide protrusions 123 may be arranged two apart from each other. The distance between the two guide protrusions 123 that are spaced apart from each other may correspond to the width of the battery housing 230 of the cleaner 200. Through this, the convenience of the cleaner 200 being coupled to the coupling surface 121 may be provided.

The coupling portion 120 may include a side wall 124. The side wall 124 may mean a wall surface arranged on both sides of the coupling surface 121 and may be vertically connected to the coupling surface 121. The side wall 124 may be connected to the first outer wall surface 112a. In addition, the side wall 124 may form a surface connected to the dustbin guide surface 122. Through this, the cleaner 200 may be stably accommodated.

The coupling portion 120 may include a coupling sensor 125. The coupling sensor 125 may detect whether the cleaner 200 is coupled to the coupling portion 120.

The coupling sensor 125 may include a contact sensor. As an example, the coupling sensor 125 may include a micro switch. At this time, the coupling sensor 125 may be arranged on the guide protrusion 123. Therefore, when the battery housing 230 or the battery 283 of the cleaner 200 is coupled between a pair of guide protrusions 123, it comes into contact with the coupling sensor 125, and the coupling sensor 125 may detect that the cleaner 200 is coupled.

The coupling sensor 125 may also include a non-contact sensor. For example, the coupling sensor 125 may include an infrared sensor (IR sensor). At this time, the coupling sensor 125 may be placed on the side wall 124. Therefore, when the dustbin 220 or the cleaner body 210 of the cleaner 200 passes the side wall 124 and reaches the coupling surface 121, the coupling sensor 125 may detect the presence of the dustbin 220 or the cleaner body 210.

The coupling sensor 125 may face the dust bin 220 or the battery housing 230 of the cleaner 200.

The coupling sensor 125 may be a means for determining whether the cleaner 200 is coupled together with power being supplied to the battery 283 of the cleaner 200.

The coupling portion 120 may include a suction portion guide surface 126. The suction port guide surface 126 may be arranged on the first outer wall surface 112a. The suction port guide surface 126 may be connected to the dust bin guide surface 122. The suction port 212 may be coupled to the suction port guide surface 126. The shape of the suction port guide surface 126 may be formed in a shape corresponding to the shape of the suction port 212.

The coupling portion 120 may further include a fixed member entry hole 127. The fixed member entry hole 127 may be formed in a long hole shape along the side wall 124 so that the fixed member 131 can enter and exit.

With this configuration, when a user couples the cleaner 200 to the coupling portion 120 of the cleaner station 100, the cleaner body 210 of the cleaner 200 may be stably placed on the coupling portion 120 by the dustbin guide surface 122, the guide protrusion 123, and the suction port guide surface 126. Through this, the convenience of the dustbin 220 and the battery housing 230 of the cleaner 200 being coupled to the coupling surface 121 may be provided.

Referring to FIG. 2 and FIG. 7, the fixing unit 130 according to the present invention will be described as follows.

The cleaner station 100 of the present disclosure may include the fixing unit 130. The fixing unit 130 may be placed on the side wall 124. In addition, the fixing unit 130 may be placed on the back surface of the coupling surface 121. The fixing unit 130 may fix the cleaner 200 coupled to the coupling surface 121. Specifically, the fixing unit 130 may fix the dust bin 220 and the battery housing 230 of the cleaner 200 coupled to the coupling surface 121.

The fixing unit 130 may include a fixing member 131 that fixes the dust bin 220 and the battery housing 230 of the cleaner 200, and a fixing member motor 133 that drives the fixing member 131. In addition, the fixing unit 130 may further include a fixing member link 135 that transmits the power of the fixing member motor 133 to the fixing member 131.

The fixing member 131 may be arranged on the side wall 124 of the coupling portion 120 and may be provided to be reciprocally movable on the side wall 124 to fix the dust bin 220. Specifically, the fixing member 131 may be accommodated inside the fixed member entry hole 127.

The fixing members 131 may be arranged on each side of the coupling portion 120. For example, the fixing member 131 may be arranged in pairs symmetrically centered on the coupling surface 121.

The fixing member motor 133 may provide power to move the fixing member 131.

The fixing member link 135 may convert the rotational power of the fixing member motor 133 into the reciprocating movement of the fixing member 131.

The fixing sealer 136 may be arranged on the dustbin guide surface 122 to seal the dustbin 220 when the cleaner 200 is coupling. With this configuration, when the dustbin 220 of the cleaner 200 is coupled, the fixing sealer 136 may be pressurized by the weight of the cleaner 200, and the dustbin 220 and the dustbin guide surface 122 may be sealed.

The fixing sealer 136 may be placed on a virtual extension line of the fixing member 131. With this configuration, when the fixing member motor 133 is operated and the fixing member 131 presses the dust bin 220, the circumference of the dust bin 220 at the same height may be sealed.

According to the embodiment, the fixing sealer 136 may be placed on the dust bin guide surface 122 in a bent line shape corresponding to the arrangement of the cover opening unit 150 described below.

Therefore, when the cleaner body 210 of the cleaner 200 is placed on the coupling portion 120, the fixing unit 130 may fix the cleaner body 210 of the cleaner 200. Specifically, when the coupling sensor 125 detects that the cleaner body 210 of the cleaner 200 is coupled to the coupling portion 120 of the cleaner station 100, the fixing motor 133 may move the fixing member 131 to fix the cleaner body 210 of the cleaner 200.

Through this, the suction power of the cleaner may be improved by preventing residual dust from remaining in the dust bin. In addition, the unpleasant odor caused by the residual dust can be eliminated by preventing residual dust from remaining in the dust bin.

Referring to FIG. 2 and FIG. 8, the door unit 140 of the present disclosure will be described as follows.

The cleaner station 100 of the present disclosure may include the door unit 140. The door unit 140 may be configured to open and close a dust passage hole 121a.

The door unit 140 may include a door 141, a door motor 142, and a door arm 143.

The door 141 is arranged in the coupling portion 120 and is hinge-coupled to the coupling surface 121, and may open and close a dust passage hole 121a formed at one end of the first suction path 181. The door 141 may include a door body 141a, a hinge portion 141b, and an arm coupling portion 141c.

The door body 141a may be formed in a shape that may block the dust passage hole 121a. For example, the door body 141a may be formed in a shape similar to a circular plate. Based on the state in which the door body 141a blocks the dust passage hole 121a, the hinge portion 141b may be arranged on the upper side of the door body 141a, and a female coupling portion 141c may be arranged on the lower side of the door body 141a.

The door body 141a may be formed in a shape that may seal the dust passage hole 121a. For example, the outer surface of the door body 141a exposed to the outside of the cleaner station 100 is formed to have a diameter corresponding to the diameter of the dust passage hole 121a, and the inner surface arranged inside the cleaner station 100 is formed to have a diameter larger than the diameter of the dust passage hole 121a. In addition, a step may be formed between the outer surface and the inner surface. Meanwhile, at least one reinforcing rib may be formed to protrude on the inner surface to connect the hinge portion 141b and the arm coupling portion 141c and to strengthen the supporting force of the door body 141a.

The hinge portion 141b may be a means for hinge-coupling the door 141 to the coupling surface 121. The hinge portion 141b may be arranged at the upper end of the door body 141a and may be coupled with the coupling surface 121.

The arm coupling portion 141c may be a means by which the door arm 143 is rotatably coupled. The arm coupling portion 141c is arranged on the lower side of the inner side, and the door arm 143 may be rotatably coupled.

With this configuration, when the door 141 is in a state where the dust passage hole 121a is closed, and the door arm 143 pulls the door body 141a, the door body 141a rotates toward the inside of the cleaner station 100 with the hinge portion 141b as an axis, and the dust passage hole 121a may be opened. Meanwhile, when the door arm 143 pushes the door body 141a while the dust passage hole 121a is open, the door body 141a rotates around the hinge part 141b toward the outside of the cleaner station 100, and the dust passage hole 121a may become blocked.

The door motor 142 may provide power to rotate the door 141. Specifically, the door motor 142 may rotate the door arm 143 in a forward or reverse direction. Here, the forward direction may mean a direction in which the door arm 143 pulls the door 141. Therefore, when the door arm 143 rotates in a forward direction, the dust passage hole 121a may be opened. In addition, the reverse direction may mean a direction in which the door arm 143 pushes the door 141. Therefore, when the door arm 143 rotates in a reverse direction, the dust passage hole 121a may be at least partially closed. The forward direction may be the opposite direction to the reverse direction.

The door arm 143 connects the door 141 and the door motor 142, and may open and close the door 141 using the power generated from the door motor 142.

For example, the door arm 143 may include a first door arm 143a and a second door arm 143b. One end of the first door arm 143a may be coupled to the door motor 142. The first door arm 143a may be rotated by the power of the door motor 142. The other end of the first door arm 143a may be rotatably coupled to the second door arm 143b. The first door arm 143a may transmit the power transmitted from the door motor 142 to the second door arm 143b. One end of the second door arm 143b may be coupled with the first door arm 143a. The other end of the second door arm 143b may be coupled with the door 141. The second door arm 143b may push or pull the door 141 to open and close the dust passage hole 121a.

The first door arm 143a and the door motor 142 may be directly coupled as in the embodiment of FIG. 8, or the first door arm 143a and the door motor 142 may be coupled through at least one gear part so that the direction and speed of the rotational force provided by the door motor 142 may be adjusted.

The door unit 140 may further include a door open/close detection unit 144. The door open/close detection unit 144 may be provided inside the housing 110 and may detect whether the door 141 is in an open state.

As an example, the door open/close detection unit 144 may be placed at each end of the rotational movement area of the door arm 143. As another example, the door open/close detection unit 144 may be placed at each end of the movement area of the door 141.

Therefore, when the door arm 143 moves to a preset door opening position DP1 or the door 141 opens to a predetermined position, the door open/close detection unit 144 may detect that the door is opened. In addition, when the door arm 143 moves to a preset door closing position DP2 or the door 141 opens to a predetermined position, the door open/close detection unit 144 may detect that the door is opened. In addition, in this embodiment, when the door arm 143 moves to the preset door flow control position DP3 or the door 141 is rotated to a predetermined position, the door open/close detection unit 144 may detect that the dust collection motor 191 has reached a position where it can change the flow rate of air sucked in.

The door open/close detection unit 144 may include a contact sensor. For example, the door open/close detection unit 144 may include a micro switch.

The door open/close detection unit 144 may also include a non-contact sensor. For example, the door open/close detection unit 144 may include an infrared sensor (IR sensor).

With this configuration, the door unit 140 may selectively open and close at least a portion of the coupling surface 121 to connect the outer side of the first outer wall surface 112a with the first suction path 181 and/or the dust collection unit 170.

The door unit 140 may be opened together when the discharge cover 222 of the cleaner 200 is opened. In addition, when the door unit (140) is closed, the discharge cover 222 of the cleaner 200 may be closed together.

When the dust in the dust bin 220 of the cleaner 200 is removed, the door motor 142 MAY rotate the door 141 to couple the discharge cover 222 to the dust bin body 221. Specifically, the door motor 142 rotates the door 141 by rotating the door 141 relative to the hinge portion 141b, and the door 141 rotating relative to the hinge portion 141b may push the discharge cover 222 toward the dustbin body 221.

Referring to FIG. 2 and FIG. 9, the cover opening unit 150 of the present disclosure will be described as follows.

The cleaner station 100 of the present disclosure may include a cover opening unit 150. The cover opening unit 150 is arranged at the coupling portion 120 and may open the discharge cover 222 of the cleaner 200.

The cover opening unit 150 may include a push projection 151, a cover opening motor 152, a cover opening gear 153, a support plate 154, and a gear box 155.

The push projection 151 may move to press the coupling lever 222c when the cleaner 200 is coupled.

The push projection 151 may be arranged at the dustbin guide surface 122. Specifically, a protrusion moving hole may formed in the dustbin guide surface 122, and a push protrusion 151 may pass through the protrusion moving hole and be exposed to the outside.

The push projection 151 may be positioned at a position where the coupling lever 222c may be pressed when the cleaner 200 is coupled. That is, the coupling lever 222c may be positioned on the projection moving hole. In addition, the coupling lever 222c may be positioned on the moving area of the push projection 151.

The push projection 151 may perform a linear reciprocating motion to press the coupling lever 222c. Specifically, the push projection 151 may be coupled to a gear box 155 so that the linear movement may be guided. The push projection 151 may be coupled to the cover opening gear 153 so that it may be moved together by the movement of the cover opening gear 153.

The cover opening motor 152 may provide power to move the push protrusion 151. Specifically, the cover opening motor 152 may rotate the motor shaft (not shown) in the forward or reverse direction. Here, the forward direction may mean the direction in which the push protrusion 151 presses the coupling lever 222c. Also, the reverse direction may mean the direction in which the push protrusion 151 that presses the coupling lever 222 returns to the original position. The forward direction may be the opposite direction to the reverse direction.

The cover opening gear 153 is coupled with the cover opening motor 152 and may move the push protrusion 151 using the power of the cover opening motor 152. Specifically, the cover opening gear 153 may be accommodated inside the gear box 155. The drive gear 153a of the cover opening gear 153 may be coupled with the motor shaft of the cover opening motor 152 to receive power. The driven gear 153b of the cover opening gear 153 may be combined with the push protrusion 151 to move the push protrusion 151. For example, the driven gear 153b is provided in the form of a rack gear, meshes with the driving gear 153a, and may receive power from the driving gear 153a.

At this time, a torsion spring 222d may be provided in the discharge cover 222. The discharge cover 222 may be rotated by a predetermined angle or more by the elastic force of the torsion spring 222d, and may be supported in the rotated position. Therefore, the discharge cover 222 may be opened, and the dust passage hole 121a and the inside of the dust bin 220 may be connected.

The gear box 155 is provided inside the housing 110 and is arranged on the lower side of the gravitational direction of the coupling portion 120, and the cover opening gear 153 may be accommodated inside.

The gear box 155 may be provided with a cover opening detection unit 155f. At this time, the cover opening detection unit 155f may include a contact sensor. For example, the cover opening detection unit 155f may include a micro switch. Meanwhile, the cover opening detection unit 155f may also include a non-contact sensor. For example, the cover opening detection unit 155f may include an infrared sensor unit (IR sensor).

At least one cover opening detection unit 155f may be arranged on the inner or outer surface of the gear box 155. For example, one cover opening detection unit 155f may be placed on the inner side of the gear box 155. At this time, the cover opening detection unit 155f may detect that the push protrusion 151 is in the initial position.

As another example, the cover opening detection unit 155f may be arranged in two on the outer surface of the gear box 155. At this time, the cover opening detection unit 155f may detect the initial position of the push protrusion 151 and the cover opening position.

Therefore, according to the present disclosure, the user may open the dust bin 220 without separately opening the discharge cover 222 of the cleaner by the cover opening unit 150, thereby improving convenience.

In addition, since the discharge cover 222 is opened while the cleaner 200 is coupled to the cleaner station 100, there is an effect of preventing dust from flying.

Referring to FIG. 2, the dust collection unit (170) will be described as follows.

The cleaner station 100 may include the dust collection unit 170. The dust collection unit 170 may be placed inside the housing 110. The dust collection unit 170 may be placed below the gravity direction of the coupling portion 120.

For example, the dust collection unit 170 may mean a dust bag that collects dust sucked from the inside of the dust bin 220 of the cleaner 200 by the dust collection motor 191.

The dust collection unit 170 may be detachably coupled to the housing 110.

Therefore, the dust collection unit 170 may be separated from the housing 110 and discarded, and a new dust collection unit 170 may be coupled to the housing 110. That is, the dust collector 170 may be defined as a consumable part.

The dust bag may be provided so that the volume increases when suction power is generated by the dust collecting motor 191 and dust is received inside. To this end, the dust bag may be provided with a material that allows air to pass through but does not allow foreign substances such as dust to pass through. For example, the dust bag may be made of a non-woven material and may have a hexahedral shape based on the increased volume.

Accordingly, since the user does not need to separately tie the bag containing the dust, the user convenience may be improved.

The cleaner station 100 according to the embodiment of the present disclosure may further include a sterilization module 175.

The sterilization module 175 may be provided on the flow path 180 or at least one may be provided around the dust collection unit 170.

The sterilization module 175 is a configuration provided to sterilize dust collected in the dust collection unit 170. The sterilization module 175 may include a light source that emits sterilizing light and a protective panel positioned below the light source to protect the light source.

Here, the light source may include at least one light emitting diode (LED) capable of emitting germicidal light having germicidal power capable of removing bacteria. The germicidal light emitted by the light source may have a wavelength that varies depending on the type of the light emitting diode.

As an example, the light source may be a light emitting diode that emits ultraviolet light having a UV-C wavelength range. Ultraviolet light is divided into UV-A (315 nm to 400 nm), UV-B (280 nm to 315 nm), and UV-C (200 nm to 280 nm) depending on the wavelength, and among these, ultraviolet light in the UV-C range can damage the DNA double helix of microorganisms and inhibit the growth of microorganisms.

Or as another example, the light source may be a light emitting diode that emits visible light having a wavelength of 405 nm. Blue light having a wavelength of 405 nm has a wavelength in the boundary region between visible light and ultraviolet light, and has been proven to have germicidal power.

The protective panel may be positioned at a predetermined distance from the light source at the bottom of the light source to prevent damage to the light source. At this time, the protective panel may be provided with a material that maximizes the light source's transmittance. For example, the protective panel may be made of quartz. Quartz is known to not interfere with the transmission of ultraviolet light in the UV-C region.

The cleaner station 100 according to the embodiment of the present disclosure is provided with a sterilization module 175 that sterilizes the dust collection unit 170 to prevent bacteria from multiplying, thereby hygienically managing the dust collection unit 170 that stores the dust sucked in for a long period of time.

Meanwhile, referring to FIG. 2 and FIG. 10, the description of the flow path unit 180 is as follows.

The cleaner station 100 may include a flow path unit 180. The flow path unit 180 may connect the cleaner 200 or the robot cleaner 300 and the dust collection unit 170.

The flow path unit 180 may include a first suction flow path 181, a second suction flow path 182, and a flow switching valve 183.

The first suction flow path 181 may connect the dust bin 220 of the cleaner 200 and the dust collection unit 170. The first suction flow path 181 may be arranged at the rear side of the coupling surface 121. The first suction flow path 181 may mean a space between the dust bin 220 of the cleaner 200 and the dust collection unit 170. The first suction path 181 may be a space formed toward the rear from the dust passage hole 121a, and may be a suction path formed by bending downward from the dust passage hole 121a so that dust and air coming out of the dust bin 220 may flow.

Through the first suction path 181, dust in the dust bin 220 of the cleaner 200 may move to the dust collection unit 170.

The second suction path 182 may connect the robot cleaner 300 and the dust collection unit 170. Dust in the robot cleaner 300 may move to the dust collection unit 170 through the second suction path 182.

The flow switching valve 183 may be placed between the dust collection unit 170 and the first suction duct 181 and the second suction duct 182. The flow switching valve 183 may selectively open and close the first suction duct 181 and the second suction duct 182 connected to the dust collection unit 170. Through this, it is possible to prevent a decrease in suction power caused by the opening of multiple ducts 181 and 182.

For example, when only the cleaner 200 is connected to the cleaner station 100, the flow switching valve 183 may connect the first suction duct 181 and the dust collector 170 and separate the connection between the second suction duct 182 and the dust collector 170.

Referring to FIG. 2 and FIG. 10, the dust suction module 190 is described as follows

The cleaner station 100 may include a dust suction module 190. The dust suction module 190 may include a dust collection motor 191, a first filter 192, and a second filter (not shown).

The dust collection motor 191 may be placed in the internal space of the housing 110. In addition, the dust collection motor 191 may be placed at the bottom of the dust collection unit 170. In addition, the dust collection motor 191 may be placed at the bottom of the first suction path 181. The dust collection motor 191 may generate suction force in the first suction path 181 and the second suction path 182. Through this, the dust collection motor 191 may provide suction power capable of sucking up dust in the dust bin 220 of the cleaner 200 and dust in the dust bin of the robot cleaner 300.

The dust collection motor 191 may generate suction power by rotation. For example, the dust collection motor 191 may be formed in a shape similar to a cylinder.

Meanwhile, in the present embodiment, a virtual dust collection motor axis line (C) that extends the rotation axis of the dust collection motor 191 may be formed.

The first filter 192 may be placed between the dust collection unit 170 and the dust collection motor 191. The first filter 192 may be a pre-filter. (See FIG. 2)

The second filter (not shown) may be placed between the dust collection motor 191 and the outer wall surface 112. The second filter (not shown) may be a HEPA filter.

The cleaner station 100 may further include a charging terminal 128. The charging terminal 128 may be arranged in the coupling portion 120. The charging terminal 128 may be electrically connected to the cleaner 200 coupled to the coupling portion 120. More specifically, the charging terminal 128 may be electrically connected to the battery terminal 270 of the cleaner 200 coupled to the coupling portion 120 to supply power to the battery 283 of the cleaner 200.

In addition, the charging terminal 128 may also include a lower charging terminal (not shown) arranged in the lower area of the housing 110. The lower charging terminal may be electrically connected to the robot cleaner 300 coupled to the lower area of the housing 110. The lower charging terminal may supply power to the battery of the robot cleaner 300 coupled to the lower area of the housing 110.

In addition, the cleaner station 100 may further include a side door (not shown). The side door may be placed in the housing 110. The side door may selectively expose the dust collection unit 170 to the outside. This allows the user to easily remove the dust collection unit 170 from the cleaner station 100.

Referring to FIGS. 2 and 3, a state in which the cleaner 200 is coupled to the cleaner station 100 will be described as follows.

In the present invention, the cleaner 200 may be mounted on the outer wall surface 112 of the cleaner station 100. For example, the dust bin 220 and the battery housing 230 of the cleaner 200 may be coupled to the coupling surface 121 of the cleaner station 100. That is, the cleaner 200 may be mounted on the first outer wall surface 112a.

At this time, the suction motor axis line a1 may be formed perpendicular to the first outer wall surface 112a. That is, the suction motor axis line a1 may be formed parallel to the ground. The suction motor axis line a1 may be formed on a plane perpendicular to the ground. In addition, the suction motor axis line a1 may be formed on a plane perpendicular to the ground.

The suction passage penetration line a2 may be formed parallel to the first outer wall surface 112a. The suction passage penetration line a2 may be formed along the direction of gravity. That is, the suction passage penetration line a2 may be formed perpendicular to the ground. In addition, the suction passage penetration line a2 may be formed on a plane that intersects perpendicularly with the first outer wall surface 112a.

The grip portion penetration line a3 may be formed at a predetermined angle with respect to the first outer wall surface 112a. In addition, the grip portion penetration line a3 may be formed at a predetermined angle with respect to the ground. The grip portion penetration line a3 may be formed on a plane that intersects perpendicularly with the first outer wall surface 112a.

The cyclone line a4 may be formed perpendicularly with respect to the first outer wall surface 112a. That is, the cyclone line a4 may be formed parallel to the ground. The cyclone line a4 may be formed on a plane perpendicular to the ground. In addition, the cyclone line a4 may be formed on a plane perpendicularly intersecting the first outer wall surface 112a.

The dustbin penetration line a5 may be formed perpendicular to the first outer wall surface 112a. In other words, the dustbin penetration line a5 may be formed parallel to the ground. The dustbin penetration line a5 may be formed on a plane perpendicular to the ground. In addition, the dustbin penetration line a5 may be formed on a plane perpendicularly intersecting the first outer wall surface 112a.

The dust collection motor axis C may be formed perpendicular to the ground. The dust collection motor axis C may be formed parallel to at least one of the first outer wall surface 112a, the second outer wall surface 112b, the third outer wall surface 112c, and the fourth outer wall surface 112d.

When the cleaner 200 is coupled to the cleaner station 100, the suction motor axis a1 may intersect with the longitudinal axis of the cleaner station 100. That is, the rotation axis of the suction motor 214 may intersect with the longitudinal axis of the cleaner station 100.

When the cleaner 200 is coupled to the cleaner station 100, the suction motor axis a1 may intersect with the dust collection motor axis C.

When the cleaner 200 and the cleaner station 100 are combined, the suction motor axis a1 may intersect the dust collection motor axis C at a predetermined angle. For example, the angle (θ1) between the suction motor axis a1 and the dust collection motor axis C may be 40 degrees or more and 95 degrees or less.

Here, the angle refers to an angle formed when the suction motor axis a1 and the dust collection motor axis C intersect, and may mean an angle interposed between the suction motor axis a1 and the dust collection motor axis C.

When the cleaner 200 is combined with the cleaner station 100, the handle 216 may be placed at a distance from the ground farther than the suction motor axis a1. With this configuration, when the user holds the handle 216, the relatively heavy suction motor 214 is positioned at the lower side in the direction of gravity, and the user may conveniently attach or detach the cleaner 200 to or from the cleaner station 100 by simply moving the cleaner 200 in a direction parallel to the ground.

In addition, when the cleaner 200 is attached to the cleaner station 100, the battery 283 may be placed at a distance further from the ground than the suction motor axis a1. With this configuration, the cleaner 200 may be stably supported on the cleaner station 100.

When the cleaner 200 is attached to the cleaner station 100, the suction path penetration line a2 may be formed parallel to the dust collection motor axis C. With this configuration, there is an effect of minimizing the space occupied on the horizontal plane when the cleaner 200 is coupled to the cleaner station 100.

At this time, the coupling portion 120 may be arranged between the suction passage through line a2 and the dust collection motor axis line C. The fixing member 131 may be arranged between the suction passage through line a2 and the dust collection motor axis line C. A cover opening unit 150 may be arranged between the suction passage through line a2 and the dust collection motor axis line C. With this configuration, the user can conveniently couple or detach the cleaner 200 to the cleaner station 100, fix the dust bin 220, and open the dust bin 220 by simply moving the cleaner 200 in a direction parallel to the ground.

The grip portion penetration line a3 may an intersect the dust collector motor axis line C at a predetermined angle. At this time, the intersection point P6 of the grip portion penetration line a3 and the dust collector motor axis line C may be located inside the housing 110. With this configuration, there is an advantage in that the user can attach the cleaner 200 to the cleaner station 100 with a simple action of pushing an arm toward the side of the cleaner station 100 while holding the cleaner 200. In addition, since a relatively heavy dust collector motor 191 is accommodated inside the housing 110, there is an effect of preventing the cleaner station 100 from shaking even if the user pushes the cleaner 200 hard into the cleaner station 100.

When the cleaner 200 is coupled to the cleaner station 100, the cyclone line a4 may intersect with the longitudinal axis of the cleaner station 100. That is, the axis of the flow of the dust separation unit 213 may intersect with the longitudinal axis of the cleaner station 100. At this time, the intersection of the axis of the flow of the dust separation unit 213 and the longitudinal axis of the cleaner station 100 may be located inside the housing 110), and more specifically, can be located inside the flow path 180.

When the cleaner 200 is coupled to the cleaner station 100, the cyclone line a4 may intersect with the dust collection motor axis line C. At this time, the intersection of the cyclone line a4 and the dust collection motor axis line C may be located inside the housing 110, and more specifically, may be located inside the flow path unit 180. With this configuration, when the cleaner 200 and the cleaner station 100 are coupled, the cleaner 200 may be stably supported on the cleaner station 100, and there is an effect of reducing flow path loss when the dust bin 220 is emptied.

When the cleaner 200 is coupled to the cleaner station 100, the dust bin penetration line a5 may intersect with the longitudinal axis of the cleaner station 100. That is, the longitudinal axis of the dustbin 220 may intersect with the longitudinal axis of the cleaner station 100. At this time, the intersection of the longitudinal axis of the dustbin 220 and the longitudinal axis of the cleaner station 100 may be located inside the housing 110, and more specifically, may be located inside the flow path unit 180.

When the cleaner 200 is coupled to the cleaner station 100, the handle 216 may be arranged at a distance from the ground farther than the dustbin penetration line a5. With this configuration, when the user holds the handle 216, the convenience of coupling or detaching the cleaner 200 to the cleaner station 100 may be provided by simply moving the cleaner 200 in a direction parallel to the ground.

In addition, when the cleaner 200 is coupled to the cleaner station 100, the battery 283 may be placed at a distance from the ground farther than the dustbin penetration line a5. With this configuration, the battery 283 presses the cleaner body 210 of the cleaner 200 by its own weight, so that the cleaner 200 may be stably supported on the cleaner station 100.

Hereinafter, a control method of a cleaner system, which is a preferred embodiment of the present invention, will be described. First, a block diagram of a configuration related to the control method will be described, and then the control method will be described later.

Hereinafter, the configuration referred to as a cleaner in this specification is a cleaner in which a handle is gripped by a user and a cleaning operation is manually performed, and may be understood to mean the cleaner 200 described with reference to FIGS. 1 to 9.

FIG. 10 is a block diagram of a cleaner station provided in a cleaner system according to embodiments, FIG. 11 is a view showing a circuit configuration for power line communication between a cleaner station and a cleaner.

Referring to FIG. 10, the control configuration of the cleaner station 100 of the present disclosure is described as follows.

The cleaner station 100 according to the embodiment of the present disclosure may further include a station control unit 164 that controls the coupling unit 120, the fixing unit 130, the door unit 140, the cover opening unit 150, the dust collection unit 170, the flow path unit 180, and the dust suction module 190.

The station control unit 164 may be composed of a printed circuit board and components mounted on the printed circuit board.

When the coupling sensor 125 detects the coupling of the cleaner 200, the coupling sensor 125 may transmit a signal indicating that the cleaner 200 is coupled to the coupling unit 120. At this time, the station control unit 164 may determine that the cleaner 200 is coupled to the coupling portion 120 by receiving the signal of the coupling sensor 125.

In addition, if power is supplied to the battery 283 of the cleaner 200 from the charging terminal 128, the station control unit 164 may determine that the cleaner 200 is coupled to the coupling portion 120.

The cleaner station 100 of the present disclosure may further include a power supply unit 450. The power supply unit 450 may be arranged in the internal space of the housing 110. The power supply unit 450 may include a converter circuit for converting rated AC power applied from the outside into DC power of an appropriate size. The power supply unit 450 may be connected to the charging terminal 128, and the DC power converted through the charging terminal 128 may be provided to the cleaner 200. The power supply unit 450 may include at least one switching element that can control the application of the DC power to be supplied to the cleaner 200 to be turned on or off. When the switching element is turned on, voltage is applied to the cleaner 200, and when the switching element is turned off, voltage application to the cleaner 200 is blocked.

Meanwhile, when the station control unit 164 determines that the cleaner 200 is connected to the cleaner station 100, the power supply unit 450 may be controlled to apply a pulse signal to the cleaner 200 through the charging terminal 128 that is electrically connected to the battery terminal 270 of the cleaner 200. More specifically, the pulse signal is a signal generated by turning on and off the charging voltage applied from the power supply unit 450 to the cleaner 200 for a preset number of times in a preset cycle to charge the cleaner 200, and the station control unit 164 may control the application of the charging voltage by controlling the switching element.

To explain more specifically with reference to the circuit diagram of FIG. 11, the switching element can be composed of a transistor Q1 and a MOSFET (M1), and the MOSFET (M1) may be placed between the input terminal of the DC power supply and the cleaner 200, and the transistor (Q1) can be connected to the gate of the MOSFET (M1). At this time, the on/off of the MOSFET (M1) can be controlled according to the on/off of the transistor (Q1). The station control unit 164 is connected to the base terminal of the transistor (Q1) to control the on/off of the transistor (Q1), so that the MOSFET (M1) can be finally turned on/off controlled, and a pulse signal in which the application and blocking of the charging voltage are repeated may be generated and transmitted to the cleaner 200.

If the station control unit 164 determines that the cleaner 200 is connected to the coupling portion 120, it may operate the fixing unit motor 133 to fix the cleaner 200.

If the fixing member 131 or the fixing unit link 135 moves to a predetermined fixing point FP1, the fixing detection unit 137 may transmit a signal that the cleaner 200 is fixed. The station control unit 164 may determine that the cleaner 200 is fixed by receiving a signal from the fixing detection unit 137 that the cleaner 200 is fixed. If the station control unit 164 determines that the cleaner 200 is fixed, the station control unit 164 may stop the operation of the fixing motor 133.

If the emptying of the dust bin 220 is completed, the station control unit 164 may release the fixation of the cleaner 200 by rotating the fixing motor 133 in the reverse direction.

The station control unit 164 may operate the door motor 142 to open the door 141 of the cleaner station 100 when it is determined that the cleaner 200 is fixed to the coupling portion 120.

The door open/close detection unit 144 may transmit a signal indicating that the door 141 is open when the door 141 or the door arm 143 reaches a predetermined opening position. The station control unit 164 may receive a signal that the door 141 is open from the door open/close detection unit 137 and determine that the door 141 is open. The station control unit 164 may stop the operation of the door motor 142 when it is determined that the door 141 is open.

When the emptying of the dustbin 220 is completed, the station control unit 164 may close the door 141 by rotating the door motor 142 in the reverse direction.

When the station control unit 164 determines that the door 141 is opened, it may operate the cover opening motor 152 to open the discharge cover 222 of the cleaner 200.

The cover opening detection unit 155f may transmit a signal that the discharge cover 222 is opened when the guide frame 151e reaches a predetermined opening position. The station control unit 164 may receive a signal that the discharge cover 222 is opened from the cover opening detection unit 155f and determine that the discharge cover 222 is opened. The station control unit 164 may stop the operation of the cover opening motor 152 when it is determined that the discharge cover 222 is opened.

The station control unit 164 may control the sterilization module 175. For example, the station control unit 164 may operate the sterilization module 175 after dust is collected in the dust collection unit 170 or at predetermined time intervals to sterilize viruses or microorganisms existing inside or outside the dust collection unit 170.

The station control unit 164 may control the flow switching valve 183 of the flow path unit 180. For example, the station control unit 164 may selectively open and close the first suction flow path 181 and the second suction flow path 182.

The station control unit 164 may drive the dust collecting motor 191 to suck up dust (de) inside the dust bin 220. In addition, the station control unit 164 may adjust the opening angle of the door 141 to a preset angle before driving the suction motor 214 of the cleaner 200 to suck up residual foreign substances such as hair after the driving of the dust collecting motor 191 is completed. More specifically, after the driving of the dust collection motor 191 is completed, while the door 141 is still open, the station control unit 164 may control the door motor 142 in the reverse direction to move the door 141 in the direction of closing the dust passage hole 121a. The station control unit 164 may stop controlling the door motor 142 when the door 141 is opened to the preset angle. After the opening angle of the door 141 is adjusted, the cleaner 200 may drive the suction motor 214. That is, the door opening angle while the suction motor 214 is driven has a smaller size than the door opening angle while the dust collection motor 191 is driven. The door opening angle at this time may mean the angle formed between the position when the door 141 blocks the dust passage hole 121a and the position when the door 141 is rotated around the hinge 141b and opened.

The station control unit 164 may operate the display unit 410 to display the dust bin emptying status and charging status for the cleaner 200 (or the robot cleaner 300).

Meanwhile, the cleaner station 100 of the present disclosure may include the display unit 410.

The display unit 410 may be placed in the housing 110, or may be placed in a separate display device, and may be equipped in a terminal including a mobile phone.

The display unit 410 may be configured to include at least one of a display panel capable of outputting characters and/or figures, and a speaker capable of outputting voice signals and sounds. The user can easily understand the status of the current administration, the remaining time, etc. through the information output through the display unit 410.

The cleaner station 100 according to an embodiment of the present disclosure may include a memory 430. The memory 430 may include various data for driving and operating the cleaner station 100.

The cleaner station 100 according to an embodiment of the present disclosure may include an input unit 440. The input unit 440 generates key input data that the user inputs to control the operation of the cleaner station 100. To this end, the input unit 440 may be composed of a key pad, a dome switch, a touch pad (static pressure/capacitive), etc. In particular, when the touch pad forms a mutual layer structure with the display unit 410, it may be called a touch screen.

FIG. 12 is a block view of a cleaner provided in a cleaner system according to embodiments.

Referring to FIG. 12, the control configuration of the cleaner 200 of the present invention is described as follows.

The cleaner 200 may further include a main control unit 284 that controls the driving of the suction motor 214.

The main control unit 284 may be composed of a printed circuit board and components mounted on the printed circuit board.

The main control unit 284 may control the suction motor 214 to be driven when receiving an input for performing cleaning from the manipulation unit 218. The main control unit 284 may control the driving strength of the suction motor 214 according to the type of command input from the manipulation unit 218. For example, the command may be a start command for starting the driving of the suction motor 214. Or, for example, the command may be a command to increase the suction power provided to the cleaning module 260. Or, for example, the command may be a command to decrease the suction power provided to the cleaning module 260. The manipulation unit 218 may be configured with a plurality of buttons for inputting the command separately.

The main control unit 284 may drive the suction motor 214 while the cleaner 200 is connected to the cleaner station 100. More specifically, when the cleaner 200 receives a pulse signal through the battery terminal 270 connected to the charging terminal 128 of the cleaner station 100, the main control unit 284 may drive the suction motor 214 after a preset waiting time has elapsed from the time the pulse signal is received. The above preset standby time can be set to an appropriate time so that the suction motor 214 may start driving after the dust collection motor 191 of the cleaner station 100 has completed driving.

At this time, the main control unit 284 may drive the suction motor 214 while the door 141 of the cleaner station 100 is opened at a preset angle. Through this, foreign substances (ha) such as hair that have not been collected and are caught on the lower end of the dust bin 220 can be re-sucked into the dust bin 220.

The distance that residual foreign substances such as hair must travel to be re-sucked into the dust bin 220 of the cleaner is shorter than the distance that they must travel to be captured inside the cleaner station 100. That is, compared to driving the dust collection motor 191 to suck up the remaining foreign substances into the inside of the cleaner station 100, driving the suction motor 214 to re-suck up the remaining foreign substances into the dust bin 220 of the cleaner can suck up the remaining foreign substances in a shorter time and with less power consumption. As a result, according to the present invention, there is an advantage of being able to remove the remaining foreign substances while minimizing the energy consumed for this.

In addition, when the cleaner system 10 is driven, the dust collection motor 191 (and the suction motor 214) operates, which generates noise. At this time, as described above, according to the present disclosure, since it takes a shorter time to suck up the remaining foreign substances, the total time that the cleaner system 10 operates is reduced, and there is an advantage of being able to reduce the time that the consumer is exposed to the driving noise.

In addition, residual foreign substances that are difficult to remove by applying suction power alone, i.e. residual foreign substances that the user must manually remove, are re-sucked into the dust bin 220 of the cleaner and stored, thereby providing convenience for the user to directly manage later. Cases in which it is difficult to remove residual foreign substances by applying suction power alone may include, for example, cases in which hair is tightly stuck in the cyclone mesh or cases in which relatively large dust (such as cookie crumbs) is stuck in the suction port.

The cleaner 200 may further include a display unit 510. The display unit 510 may be configured as a display panel capable of outputting characters and/or figures and may be arranged on the cleaner body of the cleaner 200. For example, the display unit 510 may be arranged together with the manipulation unit 218 or may be arranged on the upper surface of the first extension portion 216b of the handle 216.

The main control unit 284 may control the display unit 510 to display the charging status of the cleaner 200.

The cleaner 200 may further include a memory 520. The memory 520 may include various data for driving and operating the cleaner 200. The memory 520 may store a program including logic that can determine whether the charging station to which the cleaner 200 is connected is a cleaner station 100 that can collect dust from the dust bin 220 or a general charging station that does not include a dust collection function.

When the cleaner 200 receives a pulse signal transmitted by the cleaner station 100, the main control unit 284 may determine whether the charging station to which it is connected is the cleaner station 100 that includes a dust collection function by using the logic of the program stored in the memory 520. To this end, the main control unit 284 may periodically measure the voltage input through the battery terminal 270.

For example, if the main control unit 284 determines that the charging voltage applied to the battery terminal 270 is a pulse signal that repeats on and off, it can determine that the cleaner 200 is connected to the cleaner station 100.

For example, if the main control unit 284 determines that the charging voltage applied to the battery terminal 270 is a DC signal that remains on for a certain period of time, the main control unit 284 may determine that the cleaner 200 is connected to a general charging station.

Referring again to FIG. 11, the cleaner 200 may include a switching element M2 connected to the battery 283, and the switching element M2 may be in an off state. The main control unit 284 may be connected to a voltage measurement terminal CHG_vol. If the cleaner 200 is connected to a charging station of which the type is not determined, the switching element M2 is in an off state, so the voltage of the pulse signal input through the battery terminal 270 may be input to the voltage measurement terminal CHG_vol and measured. The measured voltage for the incoming pulse signal may be measured as a size that is forced to a certain ratio compared to the voltage of the pulse signal depending on the size of the resistance connected to the voltage measurement terminal CHG_vol.

The cleaner 200 may periodically measure the voltage detected at the voltage measurement terminal CHG_vol to determine whether the cleaner 200 is connected to the cleaner station 100 or to the general charging station. For example, in an embodiment where the pulse signal transmitted by the cleaner station 100 is applied three times, which is a preset number of times at a preset period of 50 ms, the main control unit 284 may monitor the measured voltage at a shorter period (for example, 10 ms) than the preset period in which the pulse signal is applied.

The main control unit 284 may monitor the voltage for the preset number of measurements and then calculate the average value V1. The main control unit 284 may calculate the average value V1 a preset number of times and compare it with the reference voltage value V2. For example, in an embodiment where a pulse signal is applied three times from the cleaner station 100 to the cleaner 200 at a cycle of 50 ms, when the cleaner 200 measures the voltage at a cycle of 10 ms, the average value of the voltage of the first four times (measured from 10 ms to 40 ms) may be calculated as the first average value V1_1, the average value of the voltage of the next four times (measured from 50 ms to 80 ms) may be calculated as the second average value V1_2, and the average value of the voltage of the last four times (measured from 90 ms to 120 ms) may be calculated as the third average value V1_3. At this time, if the first average value V1_1 to the third average value V1_3 are all greater than the reference voltage value V2, it can be determined that the cleaner 200 is connected to the general charging station. In contrast, if any one of the first average value V1_1 to the third average value V1_3 has a value smaller than the reference voltage value V2, it can be determined that the cleaner 200 is connected to the cleaner station 100. This determination is based on the fact that when the cleaner 200 is connected to the cleaner station 100, the measured voltage becomes 0 V at some measurement point (60 ms to 90 ms in the above example) due to the applied pulse signal, and thus the average value V1 of the voltage becomes smaller than the reference voltage value (V2).

The main control unit 284 may turn on the switching element M2 so that power is supplied to the battery 283 after determining the type of the charging station. At this time, for example, the switching element of the cleaner 200 may also be configured as a combination of a transistor Q2 and a MOSFET M2, and the main control unit 284 can control the on/off of the MOSFET M2 connected to the battery 283 by controlling the on/off of the transistor Q2 (see FIG. 11).

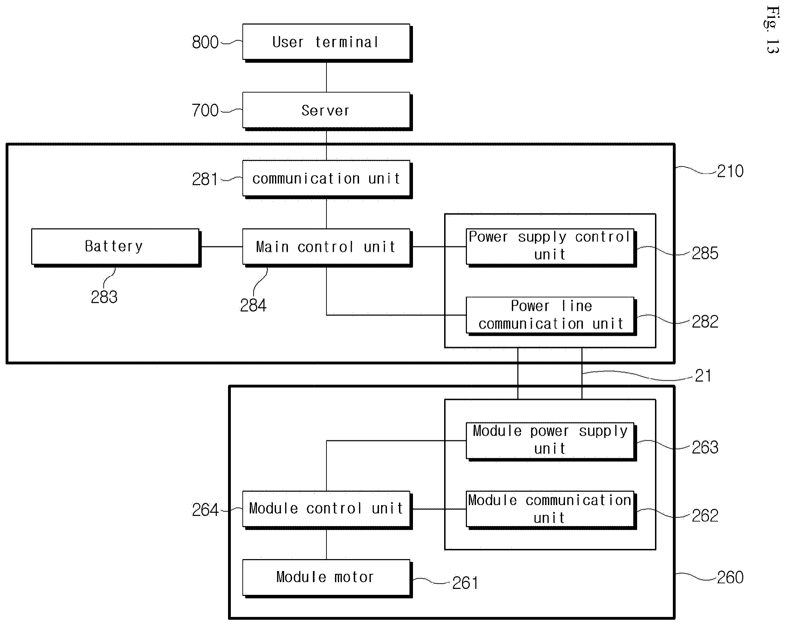

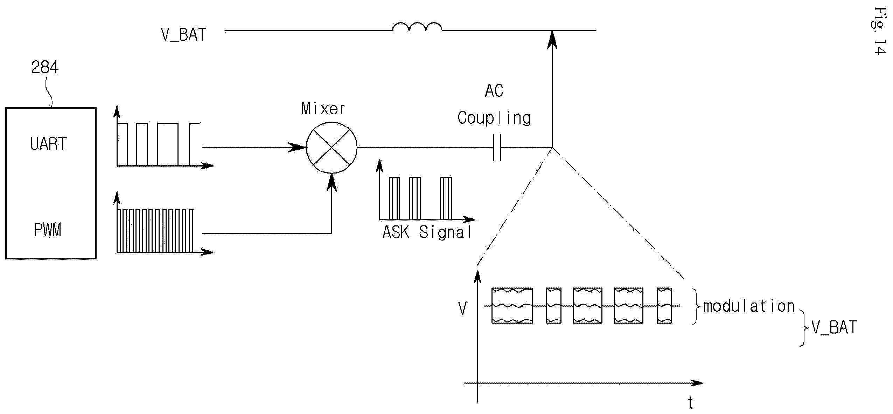

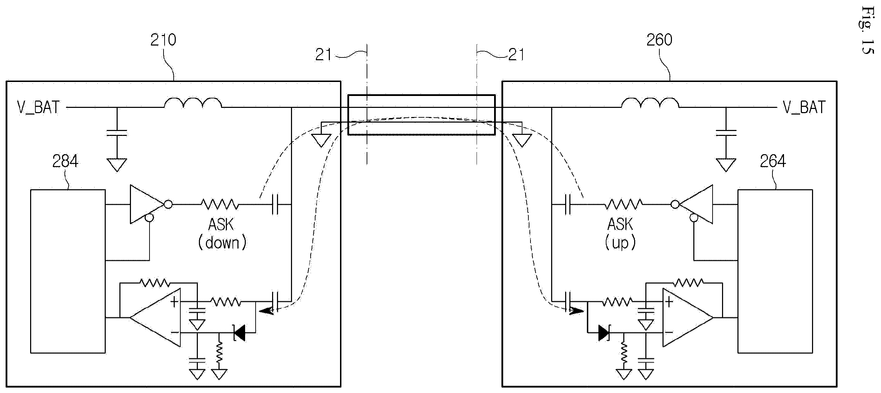

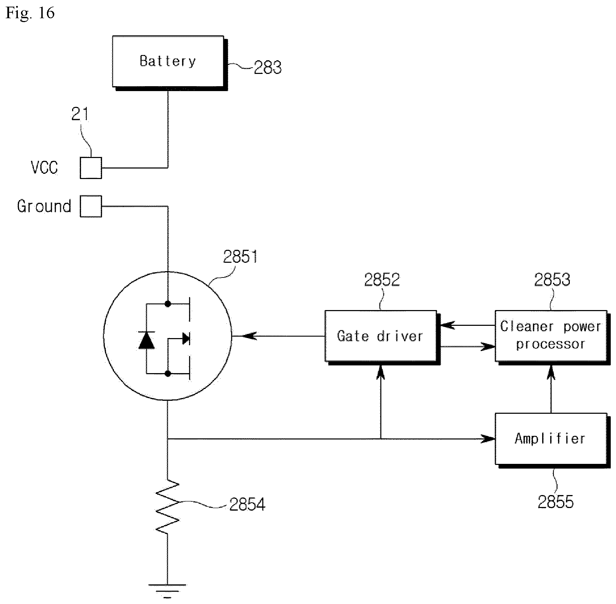

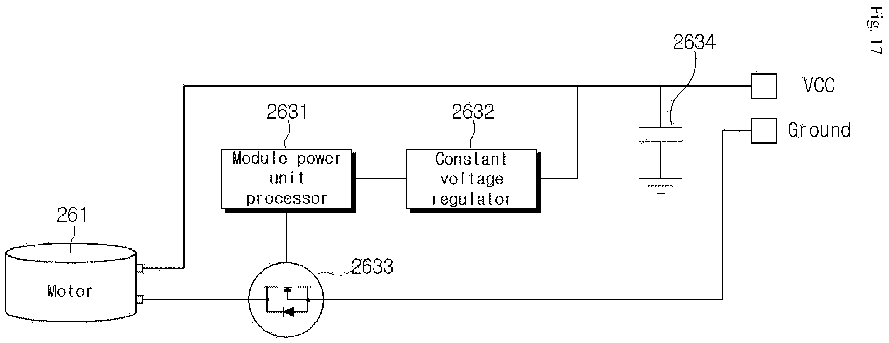

FIG. 13 is a block view of a cleaner system according to embodiments. FIGS. 14 and 15 are views showing circuit configurations for communication between a cleaner station and a cleaner according to embodiments. FIG. 16 is a view showing a circuit configuration of a power control unit according to embodiments. FIG. 17 is a view showing a circuit configuration of a power supply unit according to embodiments.

Referring to FIGS. 13 to 15, the cleaner system may include a cleaning module 260, a cleaner body 210, a cleaner station 100, a server 700, and a user terminal 800.

The cleaning module 260 may include a module motor 261, a module communication unit 262, a module power unit 263, and a module control unit 264.

The module motor 261 may rotate a mop or roller.

The module communication unit 262 may transmit and receive data with the power line communication unit 282 of the cleaner body 210 through the power supply terminal 21 using a universal asynchronous receiver/transmitter (UART) communication using an amplitude shift keying (ASK) method.

The module power supply unit 263 may receive power from the battery 283 of the cleaner body 210 through the power supply terminal 21.

The module control unit 264 may control the operation of the module motor 261.

The cleaner body 210 may include a main communication unit 281, a power line communication unit 282, a battery 283, a main control unit 284, and a power control unit 285.

The main communication unit 281 may include a communication module that transmits and receives data with the server 700 using a wired or wireless network.

The main communication unit 281 may be, for example, a WIFI modem.

The power line communication unit 282 may transmit and receive data with the module communication unit 262 of the cleaning module 260 through the power supply terminal 21 using a universal asynchronous receiver/transmitter (UART) communication using the amplitude shift keying (ASK) method.

The battery 283 is the same as the battery 283 described in FIGS. 1 to 13, so a detailed description thereof will be omitted.

The main control unit 284 may supply power to the cleaning module 260 through the power supply terminal 21 or transmit and receive data with the cleaning module 260.

The power control unit 285 controls the power of the cleaning module 260 and may detect overcurrent.

The power control unit 285 may include a transistor 2851, a gate driver 2852, a main power processor 2853, a shunt resistor 2854, and an amplifier 2855.

The transistor 2851 may be a field effect transistor (FET) and may drive the motor 161.

The gate driver 2852 may control the input voltage of the transistor 2851 to adjust the current applied to the motor 161.

The gate driver 2852 may control the input voltage of the transistor 2851 to adjust the current applied to the motor 161.

The amplifier 2855 may amplify the current signal applied to the shunt resistor 2854.

The main body power processor 2853 controls the motor 161 through the gate driver 2852 and may receive a feedback signal regarding overcurrent from the gate driver 2852. The main body power processor 2853 may monitor the motor 161 current based on the current signal received from the amplifier 2855.

The module power unit 263 may include a module power unit processor 2631, a constant voltage regulator 2632, a module transistor 2633, and a power unit capacitor 2634.

The power unit capacitor 2634 may have a capacitor value determined for power unit stabilization and cleaning module (nozzle) 260 recognition. For example, the capacity of the power unit capacitor 2634 may have a value between 10 nF and 1 F.

For example, the cleaning module 260 may include only a module motor 261 connected to the power supply terminal 21.

The cleaner station 100 is the same as the cleaner station 100 described in FIGS. 1 to 13, so a detailed description is omitted.

The server 700 may include a communication module that transmits and receives data with the main communication unit 281 of the cleaner body 210 and the user terminal 800 using a wired or wireless network.

The user terminal 800 may include a communication module that transmits and receives data with the server 700 using a wired or wireless network.

The user terminal 800 may be a digital device equipped with a memory means and a microprocessor and having computing capabilities, such as a mobile communication terminal, a desktop computer, a notebook computer, a workstation, a palmtop computer, a personal digital assistant (PDA), a web pad, etc.

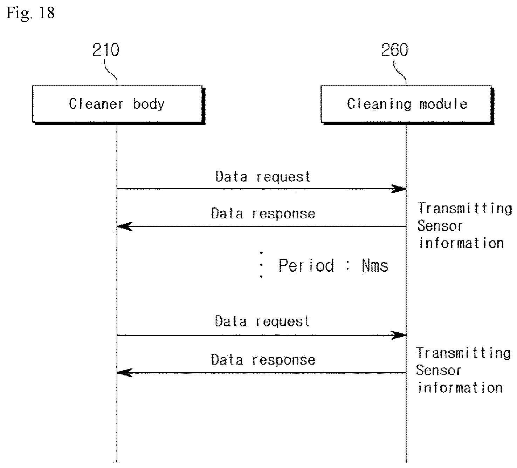

FIG. 18 is a view to describe a communication method in an application area between a cleaner and a cleaner station according to embodiments.

Referring to FIG. 18, when the cleaner body 210 is connected to the charging terminal 128 of the charging station 100, it may perform a boot mode for upgrading the firmware of the cleaning module 260.

In the application mode, the cleaner body 210 may perform full-duplex communication using the universal asynchronous receiver/transmitter (UART), but only half-duplex communication is possible because it uses the power supply terminal 21.

At this time, the cleaner body 210 becomes the master and requests data from the cleaning module 260, and the cleaning module 260 becomes the slave and only responds to the data request.

Since the cleaner body 210 cannot know what kind of request will be made from the cleaning module 260, it can attempt data communication periodically (Nms). The communication cycle (Nms) can be set depending on the size of the data packet.

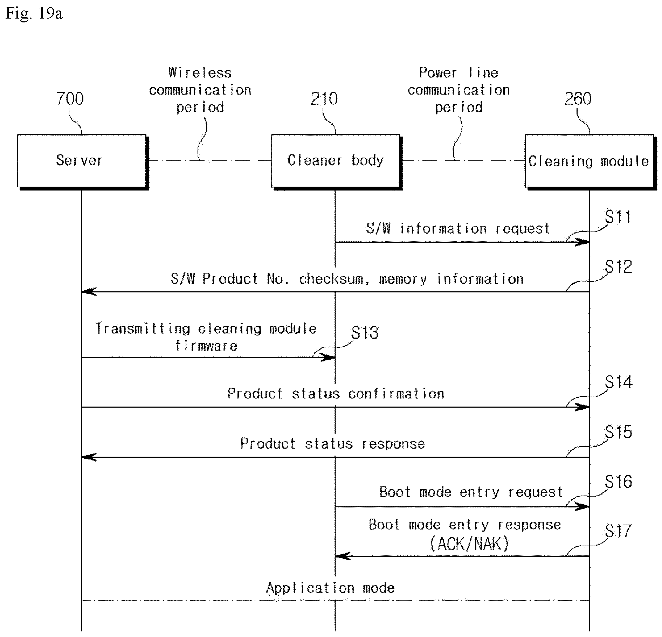

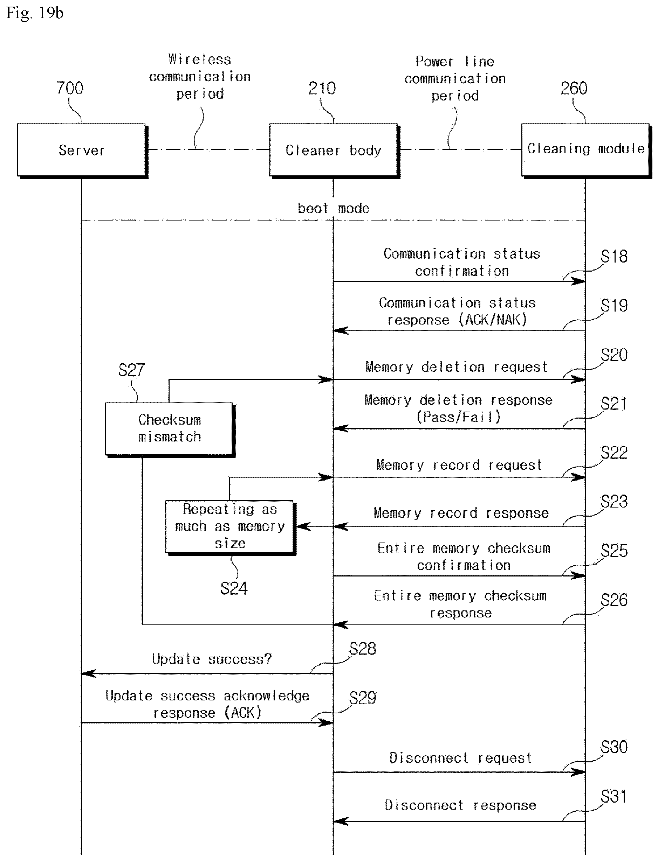

FIGS. 19a and 19b are views to describe a firmware update method between a cleaner and a cleaner station according to embodiments.

Referring to FIG. 19a and FIG. 19b, when the cleaner body 210 is connected to the charging terminal 128, the cleaner body 210 transmits a message requesting software information to the cleaning module 260, and the cleaning module 260 may check the software information (S11).

When the cleaner body 210 receives software information from the cleaning module 260, it may transmit the software information to the server 700 (S12).

For example, the software information can include software (S/W) product number information, checksum information, and memory information.

When a new firmware version is uploaded to the database (not shown), the server 700 may transmit a firmware file to the cleaner body 210 and transmit a message requesting the user terminal 800 to accept the firmware update (S13).

When the server 700 receives a firmware update acceptance message from the user terminal 800, it transmits a message requesting the cleaner body 210 to check the status of the cleaning module 260, and the cleaner body 210 may transmit a message requesting the status check to the cleaning module 260 (S14).

When the cleaning module 260 receives a message requesting the status check from the cleaner body 210, it transmits a status response message to the cleaner body 210, and the cleaner body 210 may transmit a status response message to the server 700 (S15). The status response message can include a pass response message or a fail message.

When the server 700 receives a status response message including a Pass response message from the cleaner body 210, it may transmit a message requesting the boot mode entry of the cleaning module 260 to the cleaner body 210, and the cleaner body 210 may transmit a message requesting the boot mode entry to the cleaning module 260 (S16).

When the cleaning module 260 receives a message requesting the boot mode entry from the cleaner body 210, it may transmit a boot mode entry response message to the cleaner body 210 (S17). The boot mode entry response message can include a boot mode entry acknowledgement (ACK) message or a boot mode entry negative acknowledgement (NAK) message.

When the cleaner body 210 receives a boot mode entry acknowledgement (ACK) message from the cleaning module 260, it may transmit a message requesting the communication status confirmation to the cleaning module 260 (S18).

When the cleaning module 260 receives a message requesting a communication status check from the cleaner body 210, it may transmit a communication status response message to the cleaner body 210 (S19). The communication status response message can include a communication status acknowledgement (ACK) message or a communication status negative acknowledgement (NAK) message.

When the cleaner body 210 receives a communication status acknowledgement (ACK) message from the cleaning module 260, it may transmit a message requesting a memory deletion to the cleaning module 260 (S20).

When the cleaning module 260 receives a message requesting a memory deletion from the cleaner body 210, it can transmit a memory deletion response message to the cleaner body 210 (S21). The memory deletion response message can include a memory deletion acknowledgement (ACK) message or a memory deletion negative acknowledgement (NAK) message.

When the cleaner body 210 receives a memory deletion confirmation response (ACK) message from the cleaning module 260, the cleaner body 210 transmits a message requesting software information to the cleaning module 260, and the cleaning module 260 may check the software information (S11).

When the cleaning module 260 receives a memory recording request message from the cleaner body 210, it may transmit a memory recording response message to the cleaner body 210 (S23). The memory recording response message can include a pass response message or a fail message.

The cleaner body 210 may repeat the process of transmitting a memory recording request message to the cleaning module 260 and receiving a memory recording response message from the cleaning module 260 until the firmware file transmission is completed (as much as the memory size) (S24).

When the firmware file transmission is completed, the cleaner body 210 may transmit a message requesting confirmation of the entire memory checksum to the cleaning module 260 (S25).

When the cleaning module 260 receives a message requesting confirmation of the entire memory checksum from the cleaner body 210, it may transmit a memory entire checksum response message to the cleaner body 210 (S26).

When the cleaner body 210 receives a memory entire checksum response message from the cleaning module 260, it determines whether the checksums match, and if the checksums do not match, it may transmit a message requesting memory deletion to the cleaning module 260 (S27).

When the cleaner body 210 receives a memory entire checksum response message from the cleaning module 260, it determines whether the checksums match, and if the checksums match, it can transmit an update success message to the server 700 (S28).

When the server 700 receives an update success message from the cleaner body 210, it may transmit an update success response message to the cleaner body 210 (S29). The update success response message may include an update success response (ACK) message or an update success response (NAK) message.

When the cleaner body 210 receives an update success response (ACK) message from the server 700, it may transmit a message requesting disconnection to the cleaning module 260 (S30).

When the cleaning module 260 receives a message requesting disconnection from the cleaner body 210, it may transmit a disconnection response message to the cleaner body 210 (S310). The disconnection response message can include a pass response message or a fail message.

When the cleaner body 210 receives a disconnection response message including a Pass response message from the cleaning module 260, it may reset the main control unit 284.

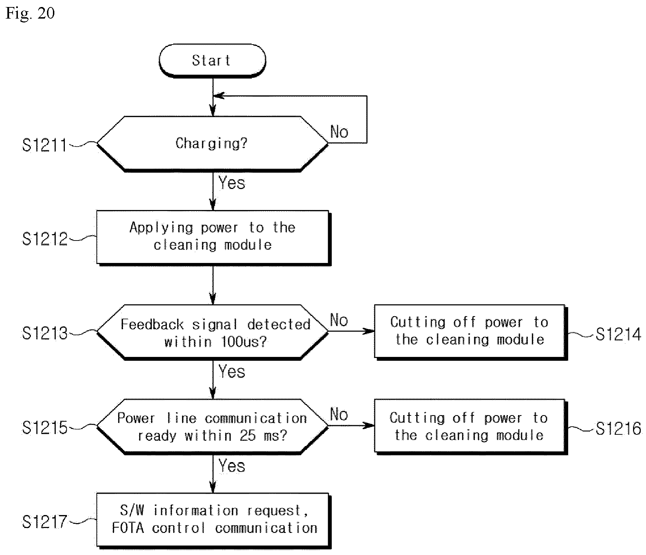

FIG. 20 is a view to describe a method of determining a cleaning module with a power supply capacitor and a cleaning module without a power supply capacitor according to embodiments.

In the case of the cleaning module 260 in which the power supply capacitor 1634 exists, the feedback signal is output by the gate driver 2852 within 5 us.

In the case of the cleaning module 260 in which the power supply capacitor 1634 does not exist, the feedback signal is not output by the gate driver 2852 within 100 us.

Referring to FIG. 20, the cleaner body 210 is mounted on the charging station 100 and supplies power to the cleaning module 260 when charging starts, and if a feedback signal is not detected from the cleaning module 260 within a preset first reference time, the power of the cleaning module 260 may be cut off (S1211, S1212, S1213, and S1214). For example, the first reference time may be 100 us.

If a feedback signal is detected from the cleaning module 260 within a preset first reference time, the cleaner body 210 may determine whether a communication ready packet is received from the cleaning module 260 within a preset second reference time (S1214). For example, the second reference time may be 25 ms.

Since the motor 161 of the cleaning module 260 is driven when the second reference time elapses, if a communication ready packet is received within the second reference time, the motor 161 is driven before it can enter the boot mode for firmware update.

If a communication ready packet is not received within the second reference time, the power of the cleaning module 260 may be cut off before the motor 161 is driven.

If the cleaner body 210 receives a communication ready packet from the cleaning module 260 within the preset second reference time, it can transmit a message requesting software information to the cleaning module 260 (S1216). Afterwards, a firmware upgrade or FOTA (Firmware Over The Air) can be performed. The firmware upgrade or FOTA (Firmware Over The Air) can be performed through the processes of steps S11 to S31 described above.

If the cleaner body 210 does not receive a communication ready packet from the cleaning module 260 within the preset second reference time, it can cut off the power of the cleaning module 260 (S1215).

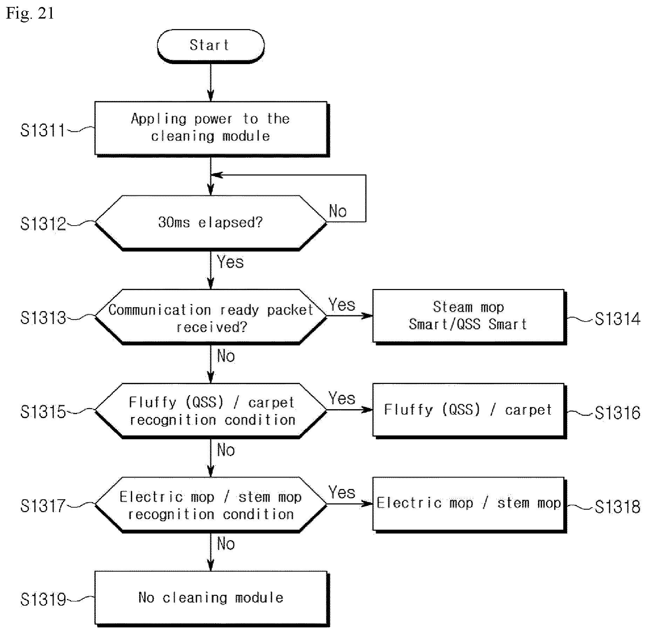

FIG. 21 is a view to describe a method of determining a cleaning module after power is applied to the cleaning module according to embodiments of the present invention.

Referring to FIG. 21, the cleaner body 210 may determine whether a preset third reference time has elapsed after power is supplied to the cleaning module 260 (S1311, and S1312). For example, the third reference time may be 30 ms.

The cleaner body 210 may determine whether a communication ready packet is received from the cleaning module 260 after power is supplied to the cleaning module 260 and the preset third reference time has elapsed (S1313).

When a communication ready packet is received from the cleaning module 260, the cleaner body 210 may determine that it is a smart type steam mop cleaning module or a smart type fluffy QSS cleaning module (S1314).

If the cleaner body 210 does not receive a communication ready packet from the cleaning module 260, if the number of feedback signals received from the cleaning module 260 within the fourth reference time is less than the first number and if the number of feedback signals received from the cleaning module 260 from the fourth reference time to the fifth reference time is less than the second number, the cleaner body 210 may be determined as a non-smart type fluffy cleaning module or carpet cleaning module (S1315, S1316). For example, the fourth reference time may be 100 us, the first number may be 1, the fifth reference time may be 10 ms, and the second number may be 5.

If the cleaner body 210 does not receive a communication ready packet from the cleaning module 260, if the number of feedback signals received from the cleaning module 260 within the fourth reference time is greater than the third number and if the number of feedback signals received from the cleaning module 260 from the fourth reference time to the fifth reference time is greater than the fourth number, the cleaner body 210 may determine that it is an electric mop cleaning module or a non-smart type steam mop cleaning module (S1317, S1318). For example, the fourth reference time may be 100 us, the third number may be 1, the fifth reference time may be 10 ms, and the fourth number may be 10.

If the cleaner body 210 is not determined to be an electric mop cleaning module or a non-smart type steam mop cleaning module, the cleaner body 210 may determine that there is no cleaning module.

As described above, according to the present disclosure, high-speed data communication is enabled using a power line without additional wires between the cleaning module and the cleaner body, and firmware upgrades are enabled using this.

According to the present disclosure, when power is supplied to the cleaning module for communication, the suction port equipped with only a motor is prevented from being driven, thereby enabling firmware upgrades.

According to the present disclosure, foreign substances such as hair that may remain stuck in the open end of the dust bin after collecting dust inside the dust bin may be removed by driving the suction motor of the vacuum cleaner. Therefore, convenience is provided for the user to hygienically manage the cleaner.

In addition, according to the present disclosure, when removing residual foreign substances such as hair, only the suction motor of the cleaner may be driven while the dust collection motor is not driven, so that the residual foreign substances can be re-sucked into the dust bin of the cleaner. Therefore, the residual foreign substances may be effectively removed while minimizing the time and power consumed.

In addition, according to the present disclosure, since residual foreign substances are removed by driving for a short time, there is an advantage in that the time that the consumer is exposed to driving noise can be reduced.

In addition, according to the present disclosure, residual foreign substances that are difficult to remove by applying suction force alone, that is, residual foreign substances that the user must manually remove, are re-sucked into the dust bin of the cleaner and stored, thereby providing convenience for the user to directly manage them later.

In addition, according to the present disclosure, the cleaner may distinguish and determine the type of charging station to which it is connected by using a pulse signal transmitted from the vacuum cleaner station to the vacuum cleaner. Accordingly, the cleaner may determine by itself whether to perform a subsequent operation for re-sucking the aforementioned residual foreign substances.

In addition, according to the present disclosure, since communication between the cleaner station and the cleaner is performed through a power line that provides power, information transmission and reception between the cleaner station and the cleaner is possible without the need for a separate communication module.

Although the present invention has been described with reference to the exemplified drawings, it is to be understood that the present invention is not limited to the embodiments and drawings disclosed in this specification, and those skilled in the art will appreciate that various modifications are possible without departing from the scope and spirit of the present invention.

Further, although the operating effects according to the configuration of the present invention are not explicitly described while describing an embodiment of the present invention, it should be appreciated that predictable effects are also to be recognized by the configuration.

## Claims

1. A cleaner system comprising:
a cleaning module configured into which external dust is introduced;
a cleaner body configured to supply power to the cleaning module through a power supply terminal and generate suction power so that external dust can be introduced through the cleaning module; and
a cleaning station on which the cleaner body is mounted, and configured to charge a battery of the cleaner body through a charging terminal,
wherein when connected to the charging terminal, the cleaner body performs a boot mode for upgrading firmware of the cleaning module.

2. The cleaner system of claim 1, wherein when connected to the charging terminal, the cleaner body transmits a message requesting software information to the cleaning module.

3. The cleaner system of claim 2, further comprising:
a server configured to transmit and receive data with the cleaner,
wherein when receiving software information from the cleaning module, the cleaner body transmits the software information to the server.

4. The cleaner system of claim 3, wherein if there is a new firmware version, the server transmits firmware file to the cleaner body and transmits a message requesting firmware update acceptance to a user terminal.

5. The cleaner system of claim 4, wherein when receiving a firmware update acceptance message from the user terminal, the server transmits a message requesting status confirmation of the cleaning module to the cleaner body, and
the cleaner body transmits a message requesting status confirmation to the cleaner module.

6. The cleaner system of claim 5, wherein when receiving the message requesting status confirmation from the cleaner body, the cleaning module transmits a status response message to the cleaner body, and
the cleaner body transmits the status response message to the server.

7. The cleaner system of claim 6, wherein when receiving the status response message from the cleaner body, the server transmits a message requesting boot mode entry of the cleaning module to the cleaner body, and
the cleaner body transmits a message requesting boot mode entry to the cleaning module.

8. The cleaner system of claim 7, wherein when receiving a boot mode entry acknowledge response (ACK) message from the cleaning module, the cleaner body transmits a message requesting communication status confirmation to the cleaner station.

9. The cleaner system of claim 8, wherein when receiving a communication status acknowledgement (ACK) message from the cleaning module, the cleaner body transmits a message requesting memory deletion to the cleaning module.

10. The cleaner system of claim 9, wherein when receiving a memory deletion acknowledgement (ACK) message from the cleaning module, the cleaner body transmits a memory record request message to the cleaning module.

11. The cleaner system of claim 10, wherein when receiving a memory record request message from the cleaner, the cleaning module transmits a memory record response message to the cleaner body.

12. The cleaner system of claim 11, wherein the cleaner body repeats a process of transmitting a memory record request message to the cleaning module and receiving a memory record response message from the cleaning module, until the firmware file transmission is completed.

13. The cleaner system of claim 12, wherein when the firmware file transmission is completed, the cleaner body transmits a message requesting confirmation of the entire memory checksum to the cleaning module.

14. The cleaner system of claim 13, wherein when receiving an entire memory checksum response message from the cleaning module, the cleaner body determines whether the checksum matches and if the checksum matches, transmits an update success message to the server.

15. The cleaner system of claim 14, wherein when receiving an update success acknowledge response (ACK) message from the server, the cleaner body transmits a disconnection request message to the cleaning module.

16. A cleaner system comprising:
a cleaning module into which external dust is introduced;
a cleaner body configured to supply power to the cleaning module through a power supply terminal and generate suction power so that external dust can be introduced through the cleaning module; and
a cleaner station on which the cleaner is mounted, and configured to transmit and receive data with the cleaner,
wherein the cleaner body comprises,
a power control unit configured to power of the cleaning module; and
a power line communication unit configured to transmit and receive data with the cleaning module through the power supply terminal.

17. The cleaner system of claim 16, wherein the power line communication unit transmits and receives data with the cleaning station using amplitude shift keying (ASK).

18. The cleaner system of claim 16, wherein the cleaning module comprises,
a motor;
a module control unit configured to control the motor;
a module power supply unit configured to receive power through the power supply terminal; and
a module communication unit configured to transmit and receive data with the main body through the power supply terminal.

19. The cleaner system of claim 18, wherein the power supply control unit comprises,
a transistor configured to drive the motor;
a gate driver configured to control the transistor; and
a main power processor configured to receive a feedback signal from the gate driver.

20. The cleaner system of claim 19, wherein if a feedback signal is not detected from the cleaning module within a preset first reference time after power is supplied to the cleaning module at charging start, the cleaner body cut off power to the cleaning module.

21. The cleaner system of claim 20, wherein when detecting a feedback signal from the cleaning module within a preset first reference time, the cleaner body determines whether a communication ready packet is received from the cleaning module within a preset second reference time.

22. The cleaner system of claim 22, wherein when receiving a communication ready packet from the cleaning module within a preset second reference time, the cleaner body transmits a message requesting software information to the cleaning module.

23. The cleaner system of claim 21, wherein when not receiving the communication ready packet from the cleaning module within a preset second reference time, the cleaner body turns off the power to the cleaning module.

24. The cleaner system of claim 19, wherein after supplying power to the cleaning module, the cleaner body determines the type of the cleaning module based on whether a preset third reference time has elapsed and whether a communication ready packet is received from the cleaning module.

25. A method of updating firmware of a cleaner system comprising a cleaner in which a cleaner body and a cleaning body are combined; and a cleaner station, wherein the cleaner body is configured to supply power to the cleaning module through a power supply terminal and generate suction power so that external dust can be drawn in through the cleaning module, the cleaner station is on which the cleaner body is mounted and configured to charge a battery of the main body through a charging terminal, and the cleaner body comprises a power control unit configured to control the power of the cleaning module; and a power line communication unit configured to transmit and receive data with the cleaning module through a power supply terminal,
the method comprising:
a step of turning off the power of the cleaning module when, after the cleaner body supplies power to the cleaning module upon start of charging, the cleaner body does not receive a feedback signal from the cleaning module within the preset first reference time;
a step of the cleaner body determining whether a communication ready packet is received from the cleaning module within a preset second reference time, when the cleaner body receives the feedback signal from the cleaning module within the preset first reference time; and
a step of the cleaner body transmitting a message requesting software information to the cleaning module, when the cleaner body receives the communication-ready packet from the cleaning module within the preset second reference time.

26. The method of updating the firmware of the cleaner system of claim 25, further comprising:
a step of turning off the power of the cleaning module, when a communication ready packet is not received from the cleaning module within the preset second reference time.
